# EUROPEAN PATENT APPLICATION

(11) **EP 2 693 764 A2**
(43) Date of publication of application: **05.02.2014**
(21) Application number: 12765133.9
(22) Date of filing: 02.04.2012
(51) Int. Cl.: H04N 21/47, H04N 5/445

(54) **METHOD FOR CONTROLLING A NETWORKED TV CAPABLE OF BOOKMARKING AT LEAST ONE OR MORE ITEMS, AND NETWORKED TV**

(30) Priority: 31.03.2011 KR 20110029317
(71) Applicant: LG Electronics Inc., Yeongdeungpo-gu Seoul 150-721 (KR)
(72) Inventor: JEONG, Youngho, Seoul 137-724 (KR)
(74) Representative: Frenkel, Matthias Alexander
(86) International application number: PCT/KR2012/002452
(87) International publication number: WO 2012/134249

(57) **Abstract**

According to one embodiment of the present invention, a method for controlling a networked TV comprises the following steps: receiving a first command for setting a bookmark for an item currently being executed, and a second command for selecting the rating of the item for which the bookmark has been set; storing information for identifying the bookmarked item having the selected rating in a bookmark memory in accordance with the received first and second commands; receiving a third command for listing one or more bookmarked items; accessing the bookmark memory; and displaying a first item having a first rating and a second item having a second rating separately from each other on the basis of the ratings of the items stored in the bookmark memory.

## Description

### [Technical Field]

The present invention relates to a multimedia device technology, and more particularly, to a method of controlling a network TV capable of bookmarking at least one or more items and the network TV.

### [Background Art]

An image display device includes, for example, a function for receiving and processing a broadcast image viewable by a user. For example, the image display device displays a broadcast, which is selected by the user from among broadcast signals transmitted from a broadcast station, on a display. Currently, broadcasters are transitioning from analog to digital broadcasting from analog broadcasting around the world.

Digital broadcasting refers to broadcasting of digital video and audio signals. The digital broadcast has low data loss due to robustness against external noise, error correction, high resolution and a high-definition screen, as compared with an analog broadcast. In addition, digital broadcasting can provide a bidirectional service unlike analog broadcasting. Recently, a smart TV formed by combining functions of an image display device and multimedia device has been discussed.

A conventional image display device cannot rapidly access numerous pre-stored contents. For example, the conventional image display device has a limit in which a user needs to perform various steps in order to execute content downloaded by the user. In particular, in consideration of a situation in which memory performance of an image display device is gradually improved, there is a need for technology for readily managing several tens to several hundreds of contents.

### [Disclosure]

### [Technical Problem]

An object of the present invention devised to solve the problem lies in a solution for more rapidly accessing homogeneous or heterogeneous items.

Another object of the present invention devised to solve the problem lies in a user interface for grouping and displaying items according to user preference.

Another object of the present invention devised to solve the problem lies in a graphical user interface (GUI) for outputting items classified into a plurality of ratings in the optimized form.

### [Technical Solution]

The object of the present invention can be achieved by providing a method of controlling a network TV for bookmarking at least one or more items, the method including receiving a first command for setting bookmarking of a currently executed item and a second command for selecting a rating of the bookmarked item, storing information for identifying the bookmarked item having the selected rating in a bookmarking memory according to the first command and the second command, receiving a third command for listing at least one or more bookmarked item, accessing the bookmarking memory, and displaying a first item having a first rating and a second item having a second rating separately from each other according to a rating for each respective item stored in the bookmarking memory

In another aspect of the present invention, provided herein is a network TV for bookmarking at least one or more items, the network TV including an interface for receiving a first command for setting bookmarking of a currently executed item and a second command for selecting a rating of the bookmarked item, a bookmarking memory for storing information for identifying the bookmarked item having the selected rating in a bookmarking memory according to the first command and the second command, a memory controller for accessing the bookmarking memory upon receiving a third command for listing at least one or more bookmarked item through the interface, and a display for displaying a first item having a first rating and a second item having a second rating separately from each other according to a rating for each respective item stored in the bookmarking memory

### [Advantageous Effects]

An embodiment of the present invention provides a solution for more rapidly accessing homogeneous or heterogeneous items.

Another embodiment of the present invention provides a user interface for grouping and displaying items according to user preference.

Another embodiment of the present invention provides a graphical user interface (GUI) for outputting items classified into a plurality of ratings in the optimized form.

More detailed advantageous effects of the present invention will be described below in detail.

### [Description of Drawings]

FIG. 1 is a schematic diagram illustrating the overall configuration of a broadcast system including a network TV according to an embodiment of the present invention;
FIG. 2 is a schematic diagram illustrating the overall configuration of a broadcast system including a network TV according to another embodiment of the present invention;
FIG. 3 is a diagram showing steps in which the network TV shown in FIG. 1 or 2 accesses a service provider (SP) and receives channel information, etc.;
FIG. 4 is a diagram showing an example, of data used in steps shown in FIG. 3;
FIG. 5 is a detailed block diagram of the network TV shown in FIG. 1 or 2 according to an embodiment of the present invention;
FIG. 6 is a detailed block diagram of the network TV shown in FIG. 1 or 2 according to another embodiment of the present invention;
FIGs. 7 and 8 are diagrams illustrating any one of network TVs separately as a set-top box and a display device according to embodiments of the present invention;
FIG. 9 is a diagram illustrating an operation for communicating with third devices in either of network TVs according to embodiments of the present invention;
FIG. 10 is a block diagram of a controller shown in FIG. 6;
FIG. 11 is a diagram showing an example of a platform architecture for either of network TVs according to embodiments of the present invention;
FIG. 12 is a diagram showing another example of a platform architecture for either of network TVs according to embodiments of the present invention;
FIG. 13 illustrates a method for controlling either of network TVs according to embodiments of the present invention using a remote controller;
FIG. 14 is a detailed block diagram of a remote controller in either of network TVs according to an embodiment of the present invention;
FIG. 15 is a diagram showing a first embodiment of a user interface (UI) in either of network TVs according to embodiments of the present invention;
FIG. 16 is a diagram showing a second embodiment of a UI either of network TVs according to the embodiments of the present invention;
FIG. 17 is a diagram showing a third embodiment of a UI either of network TVs according to the embodiments of the present invention;
FIG. 18 is a diagram showing a fourth embodiment of a UI either of network TVs according to the embodiments of the present invention;
FIG. 19 is a block diagram of the configuration of a network TV for bookmarking at least one or more items according to an embodiment of the present invention;
FIG. 20 is a diagram illustrating an on screen display (OSD) image for setting a rating level by a network TV according to an embodiment of the present invention;
FIG. 21 is a diagram illustrating an OSD image that allows a network TV to set bookmarking according to an embodiment of the present invention;
FIG. 22 is a diagram illustrating an example of a relationship between a rating and an item stored in a bookmarking memory of a network TV according to an embodiment of the present invention;
FIG. 23 is a diagram illustrating another example of a relationship between a rating and an item stored in a bookmarking memory of a network TV according to an embodiment of the present invention;
FIG. 24 is a diagram illustrating a case in which a network TV according to an embodiment of the present invention outputs a bookmarked list, according to a first embodiment of the present invention;
FIG. 25 is a diagram illustrating a case in which a network TV according to an embodiment of the present invention outputs a bookmarked list, according to a second embodiment of the present invention;
FIG. 26 is a diagram illustrating a case in which a network TV according to an embodiment of the present invention outputs a bookmarked list, according to a third embodiment of the present invention;
FIG. 27 is a diagram illustrating a case in which a network TV according to an embodiment of the present invention outputs a bookmarked list, according to a fourth embodiment of the present invention;
FIG. 28 is a diagram illustrating a case in which a network TV according to an embodiment of the present invention outputs a bookmarked list, according to a fifth embodiment of the present invention;
FIG. 29 is a diagram illustrating a case in which a network TV according to an embodiment of the present invention outputs a bookmarked list, according to a sixth embodiment of the present invention;
FIG. 30 is a diagram illustrating a case in which a network TV according to an embodiment of the present invention outputs a bookmarked list, according to a seventh embodiment of the present invention
FIG. 31 is a flowchart of a process of outputting a bookmarked list by a network TV according to an embodiment of the present invention;
FIG. 32 is a diagram illustrating a process of adjusting a position of bookmarked item by a network TV according to another embodiment of the present invention;
FIG. 33 is a diagram illustrating an example of a screen in which a network TV according to another embodiment of the present invention randomly adjusts icon sizes of bookmarked items;
FIG. 34 is a diagram illustrating an example of a screen in which a network TV according to another embodiment of the present invention randomly adjusts icon sizes of bookmarked items;
FIG. 35 is a diagram illustrating another example of a screen in which a network TV according to another embodiment of the present invention randomly adjusts icon sizes of bookmarked items;
FIG. 36 is a detailed block diagram of modules included in a network TV according to a second embodiment of the present invention;
FIG. 37 is a diagram illustrating an example of a solution for identification of a plurality of users via a network TV according to the second embodiment of the present invention;
FIG. 38 is a diagram illustrating another example, of a solution for identification of a plurality of users via a network TV according to the second embodiment of the present invention;
FIG. 39 is a diagram illustrating a database of a network TV for monitoring an item usage history of a first user, according to the second embodiment of the present invention;
FIG. 40 is a diagram illustrating a database of a network TV for monitoring an item usage history of a second user, according to the second embodiment of the present invention;
FIG. 41 is a diagram illustrating a screen when a network TV according to the second embodiment of the present invention performs a bookmarking function;
FIG. 42 is a diagram illustrating a first calculation method of automatically adjusting a size of a random item by a network TV according to the second embodiment of the present invention;
FIG. 43 is a diagram illustrating a second calculation method of automatically adjusting a size of a random item by a network TV according to the second embodiment of the present invention;
FIG. 44 is a diagram illustrating a process of outputting an image in which a size of an item is changed in consideration of an identified first user by a network TV according to the second embodiment of the present invention;
FIG. 45 is a diagram illustrating a process of outputting an image in which a size of an item is changed in consideration of an identified second user by a network TV according to the second embodiment of the present invention;
FIG. 46 is a diagram illustrating a process of outputting a changed channel browsing image by a network TV according to the second embodiment of the present invention; and
FIG. 47 is a diagram illustrating a process of outputting a changed electronic program guide (EPG) image by a network TV according to the second embodiment of the present invention.

### [Best Mode]

Exemplary embodiments of the present invention will be described with reference to the attached drawings.

The terms "module," and "unit" attached to describe the names of components are used herein to help the understanding of the components and thus should not be considered as having specific meanings or roles. Accordingly, the terms "module," and "unit" may be used interchangeably.

A network TV as forth herein is an intelligent network TV equipped with a computer support function in addition to a broadcast reception function, for example. Since an Internet function is added to a broadcast reception function, the network TV may have user-convenient interfaces such as a handwriting input device, a touchscreen, or a spatial remote controller. Further, because the network TV supports wired or wireless Internet, it is capable of e-mail transmission/reception, Web browsing, banking, gaming, etc. by connecting to the Internet or a computer. To implement these functions, the network TV may operate based on a standard general-purpose operating system (OS).

Various applications can be freely added to or deleted from, for example, a general-purpose OS kernel of the network TV according to the present invention. Therefore, the network TV may perform a number of user-friendly functions. The network TV may be an Internet protocol TV, a hybrid broadcast broadband TV (HBBTV), a smart TV, etc. for example. The network TV is also applicable to smart phones.

Embodiments of the present invention will be described in detail with reference to the attached drawings, but it should be understood that they are merely illustrative of the present invention and should not be interpreted as limiting the scope of the present invention.

In addition, although the terms used in the present invention are selected fro generally known and used terms, some of the terms mentioned in the description of the present invention, the detailed meanings of which are described in relevant parts of the description herein, have been selected at the discretion of the applicant. Furthermore, the present invention must be understood, not simply by the actual terms used but by the meanings of each term lying within.

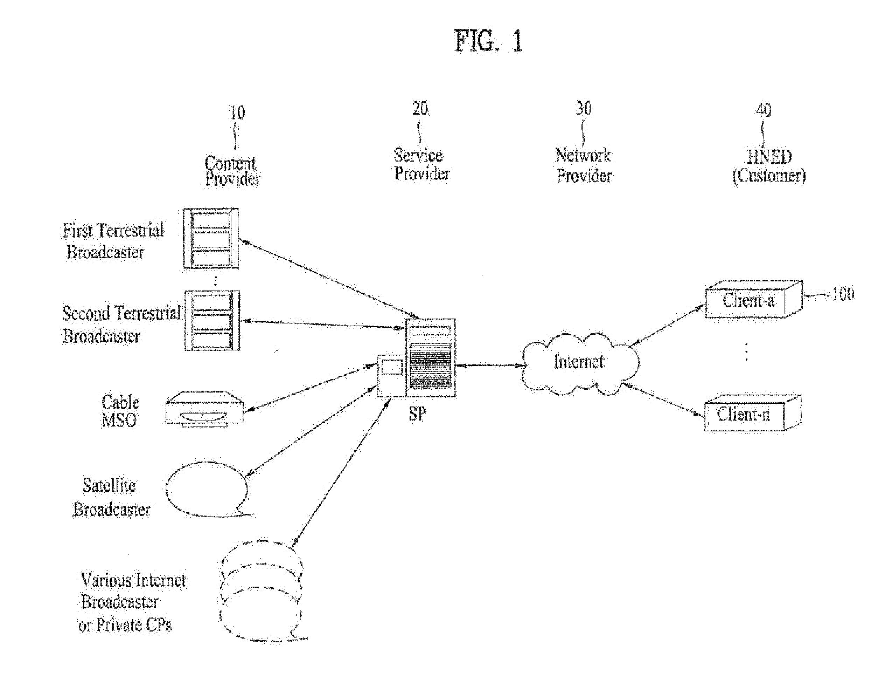

FIG. 1 is a schematic diagram illustrating the overall configuration of a broadcast system including a network TV according to an embodiment of the present invention.

As illustrated in FIG. 1, the broadcast system including the network TV according to the embodiment of the present invention may include a content provider (CP) 10, a service provider (SP) 20, a network provider (NP) 30, and a home network end device (HNED) 40. The HNED 40 corresponds to, for example, a client 100 which is a network TV according to an embodiment of the present invention. The client 100 corresponds to the network TV according to the embodiment of the present invention, and the network TV may be a network TV, a smart TV, an IPTV, etc.

The CP 10 creates and provides a variety of content. The CP 10 may be, for example, a terrestrial broadcaster, a cable system operator (SO) or multiple system operator (MSO), a satellite broadcaster, or an Internet broadcaster, as illustrated in FIG. 1.

Besides broadcast content, the CP 10 may provide various applications, which will be described later in detail.

The SP 20 may provide content received from the CP 10 as a service package. For instance, the SP 20 of FIG. 1 may package first terrestrial broadcasts, second terrestrial broadcasts, cable MSOs, satellite broadcasts, various Internet broadcasts, and applications and provide the package to users.

The SP 20 may unicast or multicast a service to the client 100. Unicast is a fo of transmission in which data is sent from only one transmitter to only one receiver. In an example of unicast transmission, upon reception of a request for data from a receiver, a server transmits the data to only one receiver. Multicast is a type of transmission or communication in which a transmitter transmits data to a specific group of receivers. For example, a server may transmit data to a plurality of pre-registered receivers at one time. For multicast registration, the Internet group management protocol (IGMP) may be used.

The NP 30 may provide a network over which a service is provided to the client 100. The client 100 may construct a home network end user (HNED) and receive a service over the HNED.

Content transmitted in the above-described system including the network TV may be protected through conditional access or content protection. CableCARD and downloadable conditional access system (DCAS) are examples of such conditional access or content protection systems.

The client 100 may also transmit content over a network. In this case, unlike the above description, in an opposite way, the client 100 serves as a CP and thus the CP 10 may receive content from the client 100. Therefore, an interactive content service or data service can be provided.

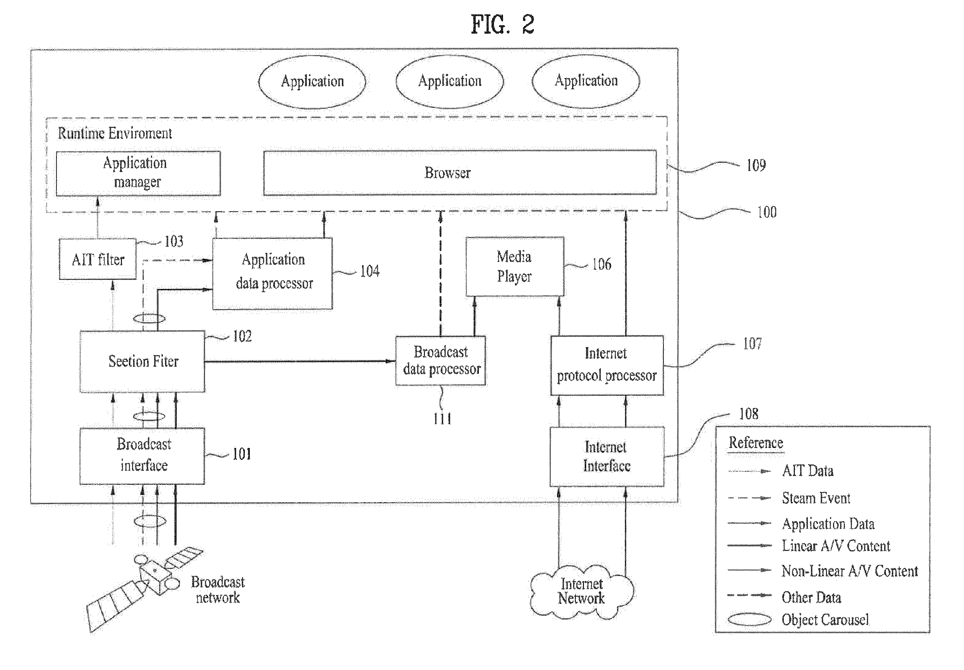

FIG. 2 is a schematic diagram illustrating the overall configuration of a broadcast system including a network TV 100 according to another embodiment of the present invention.

As illustrated in FIG. 2, the network TV 100 according to another embodiment of the present invention is connected to a broadcast network and the Internet. The network TV 100 is, for example, a network TV, a smart TV, an HBBTV, etc.

The network TV 100 includes, for example, a broadcast interface 101, a section filter 102, an application information table (AIT) filter 103, an application data processor 104, a broadcast data processor 111, a media player 106, an Internet protocol (IP) processor 107, an Internet interface 108, and a runtime module 109.

The network TV 100 receives AIT data, real-time broadcast content, application data, and stream events through the broadcast interface 101. The real-time broadcast content may be referred to as linear Audio/Video (A/V) content.

The section filter 102 performs section filtering on the four types of data received through the broadcast interface 101, and outputs the AIT data to the AIT filter 103, the linear A/V content to the broadcast data processor 111, and the stream events and application data to the application data processor 104.

Meanwhile, the network TV 100 receives non-linear A/V content and application data through the Internet interface 108. The non-linear A/V content may be, for example, content on demand (CoD) application.

The non-linear A/V content and the application data are transmitted to the media player 106 and the runtime module 109, respectively.

The runtime module 109 includes, for example, an application manager and a browser as illustrated in FIG. 2. The application manager controls the life cycle of an interactive application using the AIT data, for example. The browser displays and processes the interactive application.

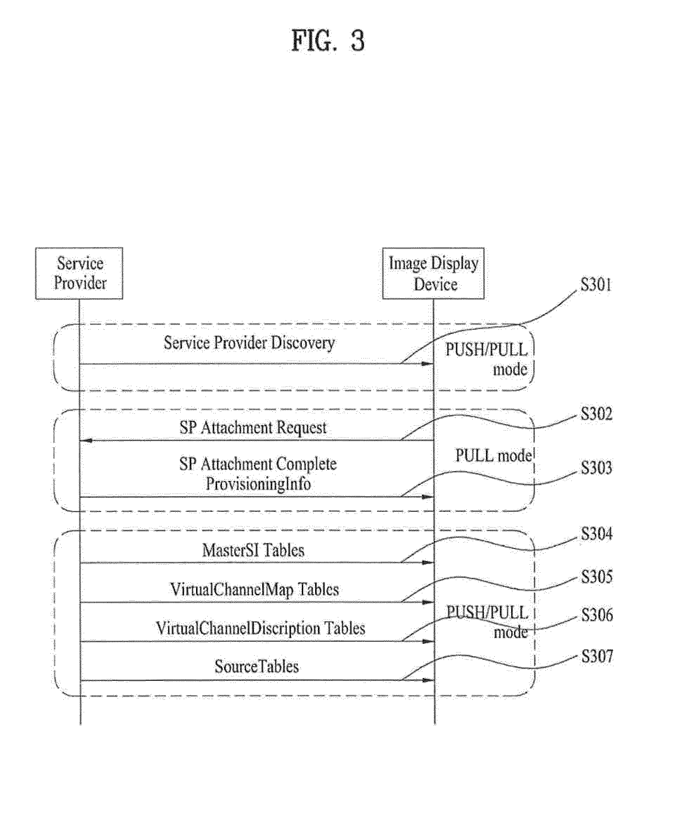

FIG. 3 is a diagram showing steps in which the network TV shown in FIG. 1 or 2 accesses an SP and receives channel information, etc. FIG. 3 is purely exemplary and the method shown in FIG. 3 does not limit the scope of the present invention.

The SP performs an SP discovery operation (S301). The network TV transmits an SP attachment request signal (S302). Upon completion of attachment to the SP, the network TV receives provisioning information from the SP (S303). Further, the network TV receives master system information (SI) tables (S304), receives virtual channel map tables (S305), receives virtual channel description tables (S306), and receives source tables from the SP (S307).

SP discovery will be described in more detail.

SP Discovery is a process by which SPs that provide IPTV services search for servers providing services to the SPs.

In order to receive information (e.g., SP discovery information) about the service discovery (SD) servers, an SD server address list can be detected, for example, using three methods, specifically use of an address preset in the network TV or an address manually set by a user, dynamic host configuration protocol (DHCP)-based SP discovery, and domain nave system service (DNS SRV)-based SP discovery. The network TV accesses a specific SD server using the SD server address list obtained through one of the above three methods and receives an SP discovery record from the specific SD server. The service provider discovery record includes information needed to perform service discovery on an SP basis. The network. TV then starts a service discovery operation using the SP discovery record. These operations can be performed in a push mode or a pull mode.

The network TV accesses an SP attachment server specified by an SP attachment locator included in the SP discovery record and performs a registration procedure (or a service attachment procedure).

Further, after accessing an authentication service server of SP specified by an SP authentication locator and performing an authentication procedure, the network TV may perform a service authentication procedure.

Once service attachment is successfully completed, a server may transmit data to the network TV in the form of a provisioning information table.

During service attachment, the network TV may include an identifier (ID) and location information thereof in data and transmit the data to the service attachment server. Thus the service attachment server may specify a service that the network TV has subscribed to based on the ID and location information. In addition, the service attachment server provides, in the form of a provisioning information table, address information from which the network TV can obtain service information (SI). The address information corresponds to access information about a Master SI Table. This method facilitates provision of a customized service to each subscriber.

The SI is divided into a master SI table record for managing access information and version information about a virtual channel map, a virtual channel map table for providing a list of services in the form of a package, a virtual channel description table that contains details of each channel, and a source table that contains access information about actual services.

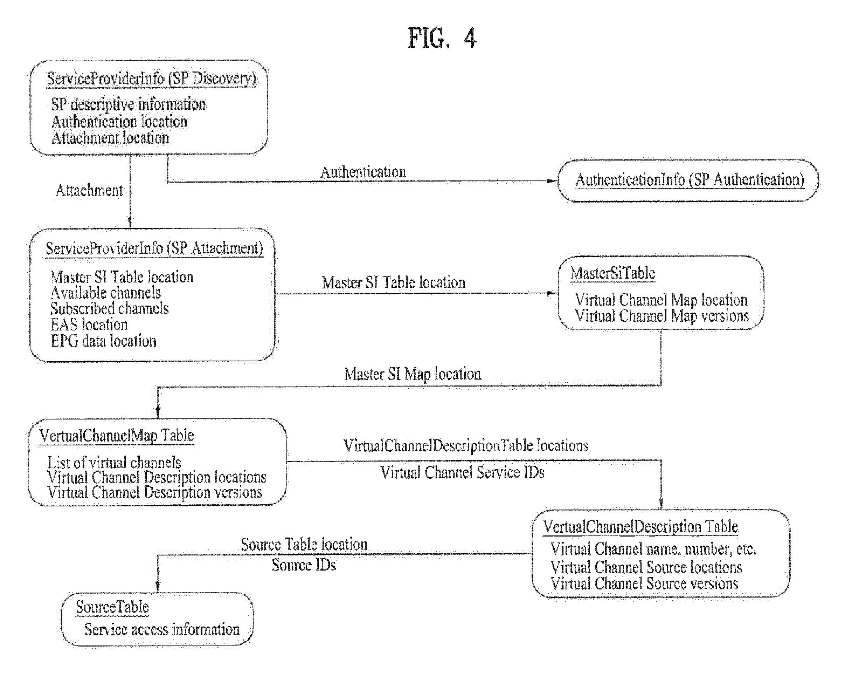

FIG. 4 is a diagram showing an example of data used in the steps shown in FIG. 3.

FIG. 4 is a detailed diagram of FIG. 3. Hereinafter, a relationship among data in the SI will be described with reference to FIG. 4.

A Master SI Table contains information about the location and version of each virtual channel MAP.

Each virtual channel MAP is identified by its virtual channel MAP identifier. Virtual channel MAP version specifies the version number of the virtual channel MAP. If any of the tables connected to the master SI table shown in FIG. 4 in the arrowed direction is modified, the versions of the modified table and overlying tables thereof (up to the Master SI Table) are incremented. Accordingly, a change in any of the SI tables can be readily identified by monitoring the master SI Table.

For example, when the source table is changed, the version of the source table is incremented and the version of the virtual channel description table that references the source table is also incremented. In conclusion, a change in any lower table leads to a change in its higher tables and, eventually, a change in the master SI table.

One master SI table may exist for each SP. However, in the case where service configurations differ for regions or subscribers (or subscriber groups), an SP may have a plurality of master SI tables in order to provide a customized service on a unit basis. Thus it is possible to efficiently provide a customized service to a subscriber through the master SI table according to a region in which the subscriber is located and subscriber information regarding the subscriber.

A virtual channel Map table may contain one or more virtual channels. A virtual channel Map includes not only details of the channels but information about the locations of the details of the channels. In the virtual channel Map table, virtual channel, description location specifies the location of a virtual channel description table including the details of the channels.

The virtual channel description table contains the details of the virtual channels. The virtual channel description table can be accessed using the virtual channel description location of the virtual channel Map table.

A source table provides information necessary to access actual services (e.g., IP addresses, ports, AV codecs, transmission protocols, etc.) on a service basis.

The above-described master SI Table, the virtual channel Map table, the virtual channel description table and the source table are delivered in four logically separate flows, in a push mode or a pull mode. For version management, the master SI table may be multicast and thus version changes can be monitored by receiving a multicast stream.

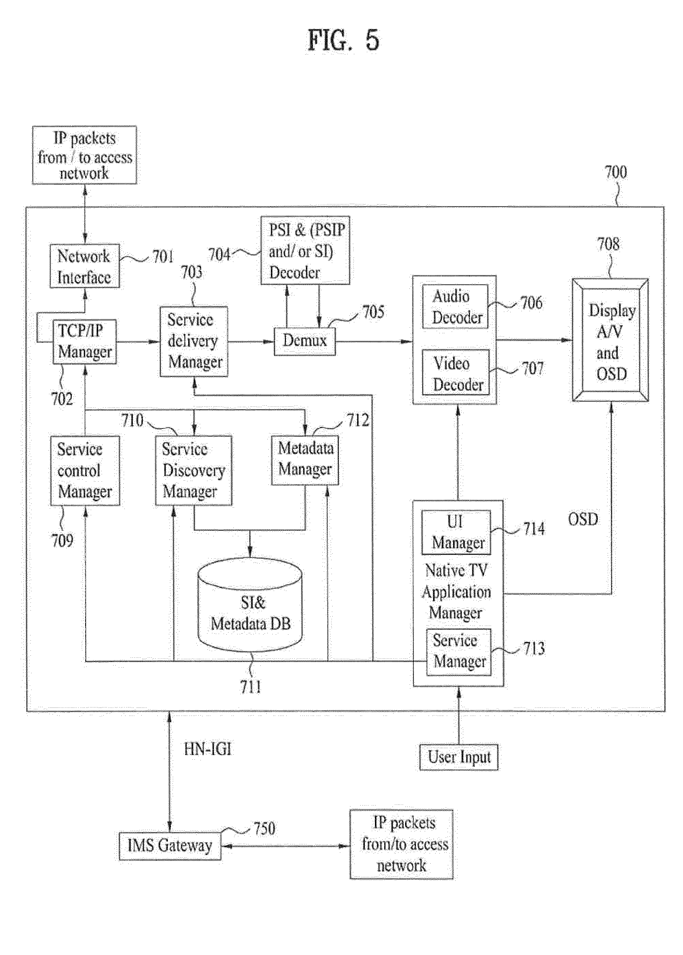

FIG. 5 is a detailed block diagram of the network TV shown in FIG. 1 or 2 according to an embodiment of the present invention. The structure of the network TV in FIG. 5 is purely exemplary and should not be interpreted as limiting the scope of the present invention.

A network TV 700 includes a network interface 701, a transmission control protocol/Internet protocol (TCP/IP) manager 702, a service delivery manager 703, a demultiplexer (DEMUX) 705, a program specific information (PSI) & (program and system information protocol (PSIP) and/or SI) decoder 704, an audio decoder 706, a video decoder 707, a display A/V and on screen display (OSD) module 708, a service control manager 709, a service discovery manager 710, a metadata manager 712, an SI & metadata database (DB) 711, a user interface (UI) manager 714, and a service manager 713.

The network interface 701 transmits packets to and receives packets from a network. Specifically, the network interface 701 receives services and content from an SP over the network.

The TCP/IP manager 702 is involved in packet reception and transmission of the network TV 700, that is, packet delivery from a source to a destination. The TCP/IP manager 702 classifies received packets according to appropriate protocols and outputs the classified packets to the service delivery manager 705, the service discovery manager 710, the service control manager 709, and the metadata manager 712.

The service delivery manager 703 controls reception of service data. For example, when controlling real-time streaming data, the service delivery manager 703 may use the real-time transport protocol/real-time transport control protocol (RTP/RTCP). If real-time streaming data is transmitted over RTP, the service delivery manager 703 parses the received real-time streaming data using RTP and transmits the parsed real-time streaming data to the DEMUX 705 or stores the parsed real-time streaming data in the SI & metadata DB 711 under the control of the service manager 713. In addition, the service delivery manager 703 feeds back network reception information to a server that provides the service using RTCP.

The DEMUX 705 demultiplexes a received packet into audio data, video data and PSI data and transmits the audio data, video data and PSI data to the audio decoder 706, the video decoder 707, and the PSI & (PSIP and/or SI) decoder 704, respectively.

The PSI & (PSIP and/or SI) decoder 704 decodes SI such as PSI. More specifically, the PSI & (PSIP and/or SI) decoder 704 receives and decodes PSI sections, PSIP sections or SI sections demultiplexed by the DEMUX 705.

The PSI & (PSIP and/or SI) decoder 704 constructs an SI DB by decoding the received sections and stores the SI DB in the SI & metadata DB 711.

The audio decoder 706 and the video decoder 707 decode the audio data and the video data received from the DEMUX 705 and output the decoded audio and video data to a user through the display A/V and OSD module 708.

The UI manager 714 and the service manager 713 manage the overall state of the network TV 700, provide UIs, and manage other managers.

The UI manager 714 provides a graphical user interface (GUI) in the form of an OSD and performs a reception operation corresponding to a key input received from the user. For example, upon reception of a key input signal regarding channel selection from the user, the UI manager 714 transmits the key input signal to the service manager 713.

The service manager 713 controls managers associated with services, such as the service delivery manager 703, the service discovery manager 710, the service control manager 709, and the metadata manager 712.

The service manager 713 also creates a channel map and selects a channel using the channel map according to the key input signal received from the UI manager 714. The service manager 713 sets the audio/video packet ID (PID) of the selected channel based on SI of the channel received from the PSI & (PSIP and/or SI) decoder 704 in the demultiplexer 705.

The service discovery manager 710 provides information necessary to select an SP that provides a service. Upon reception of a channel selection signal from the service manager 713, the service discovery manager 710 detects a service based on the channel, selection signal.

The service control manager 709 takes charge of selection and control services. For example, if a user selects a live broadcasting service, such as a conventional broadcasting service, the service control manager selects and controls the service using Internet group management protocol (IGMP) or real-time streaming protocol (RTSP). If the user selects video on demand (VoD), the service control manager 709 selects and controls the service using RTSP. RTSP supports trick mode for real-time streaming. Further, the service control manager 709 may initialize and manage a session through an IP Multimedia Control (IMC) gateway using IP multimedia subsystem (IMS) and session initiation protocol (SIP). The protocols are only exemplary and thus other protocols are also applicable.

The metadata manager 712 manages metadata related to services and stores the metadata in the SI & metadata DB 711.

The SI & metadata DB 711 stores the SI decoded by the PSI & (PSIP and/or SI) decoder 704, the metadata managed by the metadata manager 712, and the information required to select an SP, received from the service discovery manager 710. The SI & metadata DB 711 may store system setup data.

The SI & metadata DB 711 may be constructed in a non-volatile RAM (NVRAM) or a flash memory.

An IMS gateway (IG) 750 is a gateway equipped with functions needed to access IMS-based IPTV services.

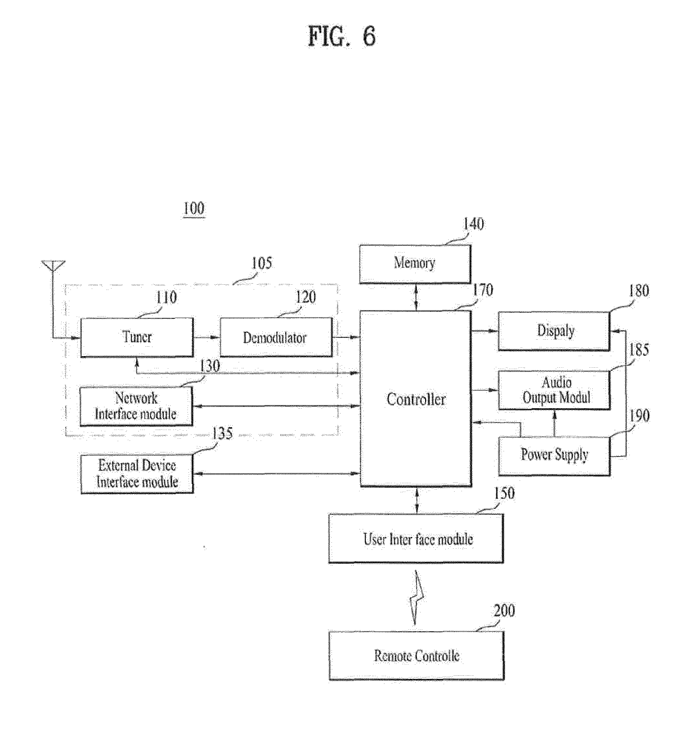

FIG. 6 is a detailed block diagram of the network TV 100 shown in FIG. 1 or 2 according to another embodiment of the present invention.

Referring to FIG. 6, the network TV 100 according to another embodiment of the present invention includes a broadcast receiver 105, an external device interface 135, a memory 140, a user input interface 150, a controller 170, a display 180, an audio output unit 185, a power supply 190, and a camera module (not shown). The broadcast receiver 105 may include a tuner 110, a demodulator 120 and a network interface 130. As needed, the broadcast receiver 105 may be configured so as to include only the tuner 110 and the demodulator 120 or only the network interface 130.

The tuner 110 tunes a radio frequency (RF) broadcast signal corresponding to a channel selected by a user or pre-stored all channels among a plurality of RF broadcast signals received through an antenna and converts the tuned RF broadcast signal into an intermediate frequency (IF) signal or a baseband video or audio signal.

For example, when the tuned RF broadcast signal is a digital broadcast signal, the tuner 110 converts the tuned RF broadcast signal into a digital IF signal DIF. On the other hand, when the tuned RF broadcast signal is an analog broadcast signal, the tuner 110, the tuner 110 converts the broadcast signal into an analog baseband video or audio signal CVBS/SIF. That is, the tuner 110 can process all digital broadcast signals or analog broadcast signals. The analog baseband video or audio signal CVBS/SIF may be directly input to the controller 170.

The tuner 110 may be capable of receiving broadcast signals from an advanced television systems committee (ATSC) single-carrier system or from a digital video broadcasting (DVB) multi-carrier system.

The tuner 110 may sequentially tune a number of broadcast signals corresponding to all broadcast channels previously stored by a channel storage function from a plurality of signals received through the antenna and may convert the tuned RF broadcast signals into IF signals or baseband video or audio signals.

The demodulator 120 receives the digital IF signal DIF from the tuner 110 and demodulates the digital IF signal DIF.

For example, if the digital IF signal DIF is an ATSC signal, the demodulator 120 may perform 8-vestigal sideband (VSB) demodulation on the digital IF signal DIF. The demodulator 120 may also perform channel decoding. For channel decoding, the demodulator 120 may include a trellis decoder (not shown), a de-interleaver (not shown) and a reed-solomon decoder (not shown) so as to perform trellis decoding, de-interleaving and reed-solomon decoding.

For example, if the digital IF signal DIF is a DVB signal, the demodulator 120 performs coded orthogonal frequency division multiple access (COFDMA) demodulation upon the digital IF signal DIF. The demodulator 120 may also perform channel decoding. For channel decoding, the demodulator 120 may include a convolution decoder (not shown), a de-interleaver (not shown), and a reed-solomon decoder (not shown) so as to perform convolution decoding, de-interleaving, and reed-solomon decoding.

The demodulator 120 may perform demodulation and channel decoding on the digital IF signal DIF, thereby obtaining a transport stream (TS). The TS may be a signal in which a video signal, an audio signal and a data signal are multiplexed. For example, the TS may be an MPEG-2 TS in which an MPEG-2 video signal and a dolby AC-3 audio signal are multiplexed. An MPEG-2 TS may include a 4-byte header and a 184-byte payload.

The demodulator 120 may be configured as separate demodulator according to an ATSC method and a DVB method. That is, the demodulator 120 may include an ATSC demodulator and a DVB demodulator.

The TS output from the demodulator 120 may be input to the controller 170 and thus subjected to demultiplexing and signal processing. The processed video and audio signals are output to the display 180 and the audio output unit 185, respectively.

The external device interface 135 may serve as an interface between an external device and the network TV 100. For interfacing, the external device interface 135 may include an A/V input/output (I/O) unit (not shown) or a wireless communication module (not shown).

The external device interface 135 may be connected to an external device such as a digital versatile disc (DVD) player, a Blu-ray player, a game console, a camera, a camcorder, or a computer (e.g., a laptop computer), wirelessly or by wire. Then, the external device interface 135 externally receives video, audio, or data signals from the external device and transmits the received input signals to the controller 170 of the network TV 100. In addition, the external device interface 135 may output video, audio, and data signals processed by the controller 170 to the external device. In order to receive or transmit audio, video and data signals from or to the external device, the external device interface 135 includes the A/V I/O unit (not shown) or the wireless communication module (not shown).

The A/V I/O unit may include a universal serial bus (USB) port, a composite video banking sync (CUBS) port, a component port, a super-video (S-video) (analog) port, a digital visual interface (DVI) port, a high-definition multimedia interface (HUMI) port, a red-green-blue (RGB) port, and a D-sub port, in order to input the video and audio signals of the external device to the network. TV 100.

The wireless communication module may perform short-range wireless communication with other electronic devices. For short-range wireless communication, the wireless communication module may use Bluetooth, radio-frequency identification (RFID), infrared data association (IrDA), ultra wideband (UWB), ZigBee, and digital living network alliance (DLNA) communication standards.

The external device interface 135 may be connected to various set-top boxes through at least one of the above-described ports and may thus perform an I/O operation with the various set-top boxes.

The external device interface 135 may receive applications or an application list from an adjacent external device and provide the applications or the application list to the controller 170 or the memory 140.

The network interface 130 serves as an interface between the network. TV 100 and a wired/wireless network such as the Internet. The network interface 130 may include an Ethernet port for connection to a wired network. For connection to wireless networks, the network interface 130 may use wireless local area network (WLAN) (i.e., Wi-Fi), wireless broadband (WiBro), world interoperability for microwave access (WiMax), and high speed downlink packet access (HSDPA).

The network interface 130 may transmit data to or receive data from another user or electronic device over a connected network or another network linked to the connected network. Especially, the network interface 130 may transmit data stored in the network TV 100 to a user or electronic device selected from among users or electronic devices pre-registered with the network TV 100.

The network interface 130 may access a specific web page over a connected network or another network linked to the connected network. That is, the network interface 130 may access a specific web page over a network and transmit or receive data to or from a server. Additionally, the network interface 130 may receive content or data from a CP or an NP. Specifically, the network interface 130 may receive content such as movies, advertisements, games, VoD, and broadcast signals, and information related to the content from a CP or an NP. Also, the network interface 130 may receive update information about firmware from the NP and update the firmware. The network interface 130 may transmit data over the Internet or to the CP or the NP.

The network interface 130 may selectively receive a desired application among open applications over a network.

The memory 140 may store various programs necessary for the controller 170 to process and control signals, and may also store processed video, audio and data signals.

The memory 140 may temporarily store a video, audio or data signal received from the external device interface 135 or the network interface 130. The memory 140 may store information about broadcast channels by the channel storage function.

The memory 140 may store applications or a list of applications received from the external device interface 135 or the network interface 130.

The memory 140 may store a variety of platforms which will be described later.

The memory 140 may include, for example, at least one of a flash memory-type storage medium, a hard disk-type storage medium, a multimedia card micro-type storage medium, a card-type memory (e.g. a secure digital (SD) or extreme digital (XD) memory), a random access memory (RAM), or a read-only memory (ROM) such as an electrically erasable and programmable read only memory (EEPROM). The network TV 100 may reproduce content stored in the memory 140 (e.g. video files, still image files, music files, text files, and application files) to the user.

While the memory 140 is shown in FIG. 6 as configured separately from the controller 170, to which the present invention is not limited, the memory 140 may be incorporated into the controller 170, for example.

The user input interface 150 transmits a signal received from the user to the controller 170 or transmits a signal received from the controller 170 to the user.

For example, the user input interface 150 may receive control signals such as a power-on/off signal, a channel selection signal, and a screen setting signal from a remote controller 200 or may transmit a control signal received from the controller 170 to the remote controller 200, according to various communication schemes, for example, RF communication and IR communication.

For example, the user input interface 150 may provide the controller 170 with control signals received from local keys (not shown), such as inputs of a power key, a channel key, and a volume key, and setting values.

Also, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be audibly output, through the audio output unit 185. Also, the audio signal processed by the controller 170 may be transmitted to the external output device through the external device interface 135.

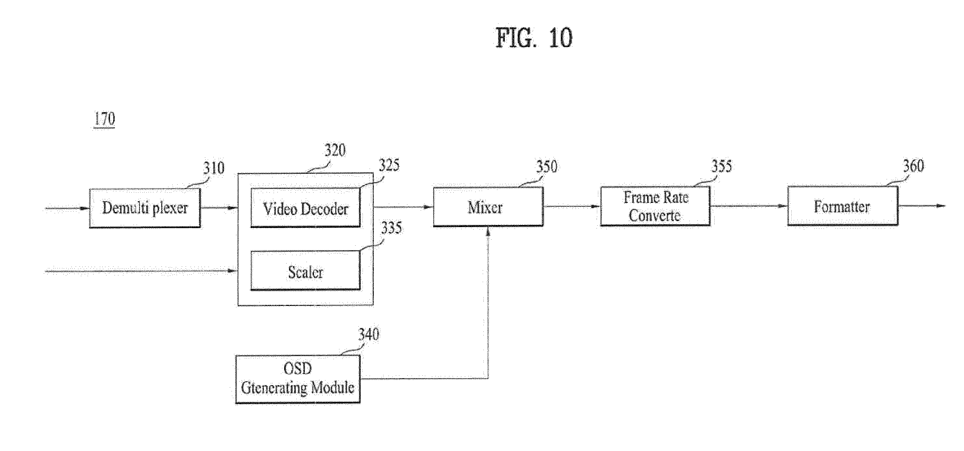

While not shown in FIG. 6, the controller 170 may include a DEMUX and a video processor, which will be described later with reference to FIG. 10.

In addition, the controller 170 may provide overall control to the network TV 100. For example, the controller 170 may control the tuner 110 to tune to an RF broadcast signal corresponding to a user-selected channel or a pre-stored channel.

The controller 170 may control the network TV 100 according to a user command received through the user input interface 150 or according to an internal program. Especially the controller 170 may access a network and download an application or application list selected by the user to the network TV 100 over the network.

For example, the controller 170 controls the tuner 110 to receive a signal of a channel selected according to a specific channel selection command received through the user input interface 150 and processes a video, audio or data signal of the selected channel. The controller 170 outputs the processed video or audio signal along with information about the user-selected channel to the display 180 or the audio output unit 185.

As another example, the controller 170 outputs a video or audio signal received from an external device such as a camera or a camcorder through the external device interface 135 to the display 180 or the audio output unit 185 according to an external device video playback command received through the external device interface 150.

The controller 170 may control the display 180 to display images. For instance, the controller 170 may control the display 180 to display a broadcast image received from the tuner 110, an externally input image received through the external device interface 135, an image received through the network interface 130, or an image stored in the memory 140. The image displayed on the display 180 may be a two-dimensional (2D) or three-dimensional (3D) still image or moving picture.

The controller 170 may control content playback. The content may include any content stored in the network TV 100, received broadcast content, and externally input content. The content includes at least one of a broadcast image, an externally input image, an audio file, a still image, a web page, or a text file.

With regard to an embodiment of the present invention, the controller 170 may control display of a home image on the display 180 according to a motion input of the home image.

The home image may include a plurality of card objects that are sorted according to a content source. The card objects may include at least one of a card object indicating a thumbnail list of broadcast channels, a card object indicating a broadcast guide list, a card object indicating a broadcast reservation list or a recording list, and a card object indicating a media list in the network TV or a device connected to the network TV. In addition, the card objects may further include at least one of a card object indicating a list of connected external devices and a card object indicating a list related to call.

In addition, the home image may further include an application menu including at least one executable application item.

When a motion input of a card object is present, the controller 170 may control movement and display of the corresponding card object or control movement and display of a card object, which is not displayed on the display 180, on the display 180.

When a predetermined card object is selected among the plural card objects in the home image, the controller 170 may control display of an image corresponding card object on the display 180.

The controller 170 may control display of a received broadcast image and an object indicating information related to the broadcast image, in a card object indicating the broadcast image. In addition, a size of the broadcast image may be fixed by lock setting.

The controller 170 may control display of a set-up object for at least one of image setting, audio setting, image setting, reservation setting, pointer setting of a remote controller, and a network setting in the network TV, in the home image.

The controller 170 may control display of an object regarding log-in, help or exit item, in a region of the home image.

The controller 170 may control display of an object indicating a total number of card objects or the number of card objects displayed on the display 180 among all card objects.

When a card object title in a predetermined object is selected among card objects displayed on the display 180, the controller 170 may control display of the corresponding card object as a full image on the display 180.

When the controller 170 receives incoming call in a connected external device or a network TV, the controller 170 may control focus and display of call-related card object or control movement of the call-related card object into the display 180 and display thereof, among the plural card objects.

In case of entrance to an application view item, the controller 170 may control display application list or application downloadable from the network TV 100 or an external network.

The controller 170 may control installment and driving of application downloaded from the external network in addition to various user interfaces. In addition, the controller 170 may control display of an image related to executed application on the display 180 according to user selection.

Although not illustrated in drawings, the network TV 100 may further include a channel browsing processor for generating a thumbnail image corresponding to a channel signal or an external input signal.

The channel browsing processor may receive the TS output from the demodulator 120 or the TS output from the external device interface 135, extract images from the received TS, and generate thumbnail images. The generated thumbnail image may be directly output to the controller 170 or may be output after being encoded. Also, it is possible to encode the thumbnail images into a stream and output the stream to the controller 170. The controller 170 may display a thumbnail list including a plurality of received thumbnail images on the display 180. The thumbnail images in the thumbnail list may be updated sequentially or simultaneously. Therefore, the user can readily identify broadcast programs received through a plurality of channels.

The display 180 converts each of an image signal, a data signal, and an OSD signal, processed by the controller 170, or each of image signal and a data signal, received from the external device interface 135 into R, G, B signals, thereby generating driving signals.

The display 180 may be a plasma display panel (PDP), a liquid crystal display (LCD), an organic light-emitting diode (OLED) display, a flexible display, a 3D display, or the like.

The display 180 may also be a touchscreen that can be used not only as an output device but also as an input device.

The audio output unit 185 receives a signal that is speech-processed by the controller 170, for example, a stereo signal, a 3.1 channel signal, or a 5.1 channel signal to output a sound. The audio output unit 185 may employ various speaker configurations.

To sense a user gesture, the network TV 100 may further include a sensor unit (not shown) including at least one of a touch sensor, a voice sensor, a position sensor, and a motion sensor, as described above. A signal sensed by the sensor unit (not shown) may be output to the controller 170 through the user input interface 150.

The network TV 100 may further include a camera unit (not shown) for capturing images of a user. Image information captured by the camera unit (not shown) may be input to the controller 170.

The controller 170 may detect a user gesture from an image captured by the camera unit or a signal sensed by the sensor unit (not shown) or by combining the captured image and the sensed signal.

The power supply 190 may supply corresponding power across the network TV 100.

Particularly, the power supply 190 may supply power to the controller 170 which may be implemented as a system on chip (SOC), the display 180 for displaying an image, and the audio output unit 185 for audio output.

To this end, the power supply 190 may include a rectifier (not shown) for converting alternating current (AC) into direct current (DC). If the display 180 is configured with, for example, a liquid crystal panel having a plurality of backlight lamps, the power supply 190 may further include an inverter (not shown) capable of performing pulse width modulation (PWM) for luminance change or dimming driving.

The remote controller 200 transmits user input to the user input interface 150. For transmission of user input, the remote controller 200 may use various communication techniques such as luetooth, RF communication, IR communication, ultra wideband (UWB), and ZigBee.

In addition, the remote controller 200 may receive a video signal, an audio signal or a data signal from the user input interface 150 and output the received signals visually, audibly or as vibrations.

The above-described network TV 100 may be a fixed digital broadcast receiver capable of receiving at least one of ATSC (8-VSB) broadcast programs, DVB-T (COFDM) broadcast programs, and ISDB-T (BST-OFDM) broadcast programs.

The block diagram of the network TV 100 illustrated in FIG. 2 is purely exemplary. Depending upon the specifications of the network TV 100 in actual implementation, the components of the network TV 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope and spirit of the present invention.

Unlike the configuration illustrated in FIG. 6, the network TV 100 may be configured so as to receive and play back video content through the network interface 130 or the external device interface 135, without the tuner 100 and the demodulator 120 shown in FIG. 6.

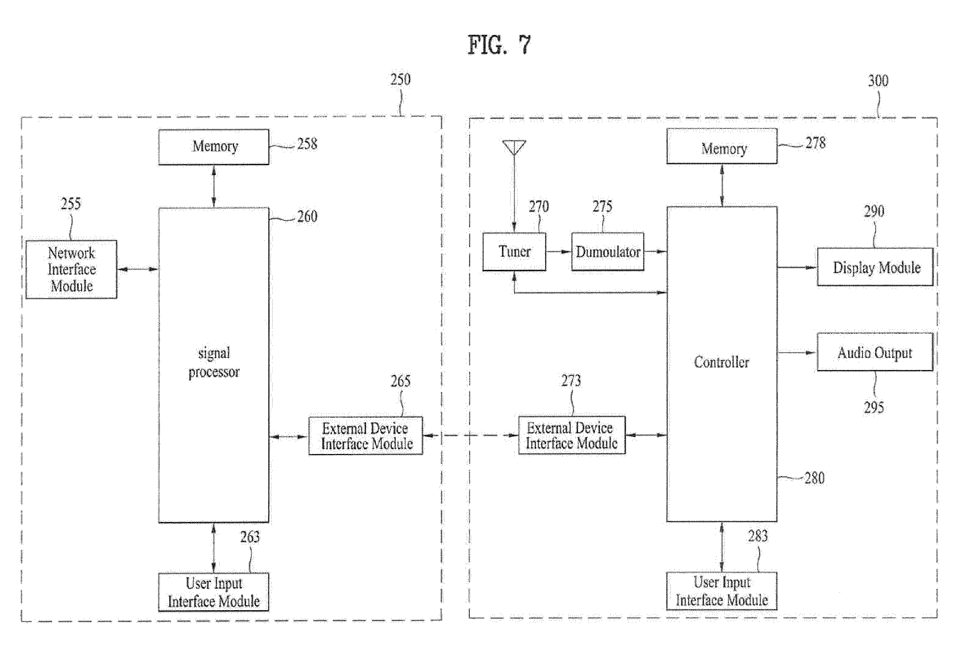

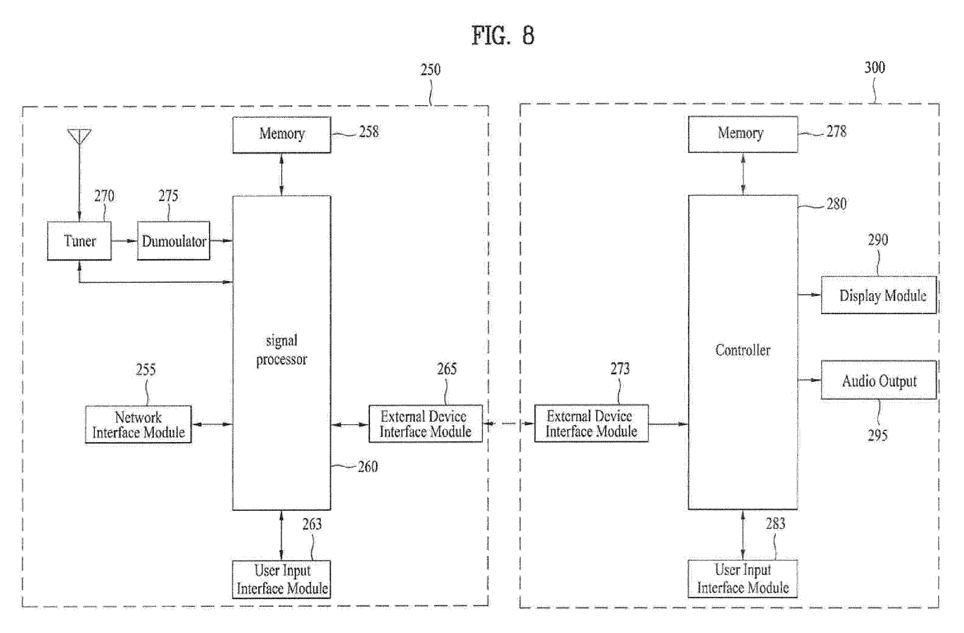

The network TV 100 is an example of an image signal processor for processing an image stored in the device or an input image. Other examples of the network TV 100 include a set-top box, a DVD player, a blu-ray player, a game console, a computer, etc., without the display 180 and the audio output unit 185 shown in FIG. 6. The set-top box will be described below with reference to FIGs. 7 and 8.

FIGs. 7 and 8 are diagrams illustrating any one of the network TVs separately as a set-top box 250 and a display device 300 according to embodiments of the present invention.

Referring to FIG. 7, the set-top box 250 and the display device 300 may transmit or receive data wirelessly or by wire.

The set-top box 250 may include a network interface 255, a memory 258, a signal processor 260, a user input interface 263, and an external device interface 265.

The network interface 255 serves as an interface between the set-top box 250 and a wired/wireless network such as the Internet. The network interface 255 may transmit data to or receive data from another user or another electronic device over a connected network or over another network linked to the connected network.

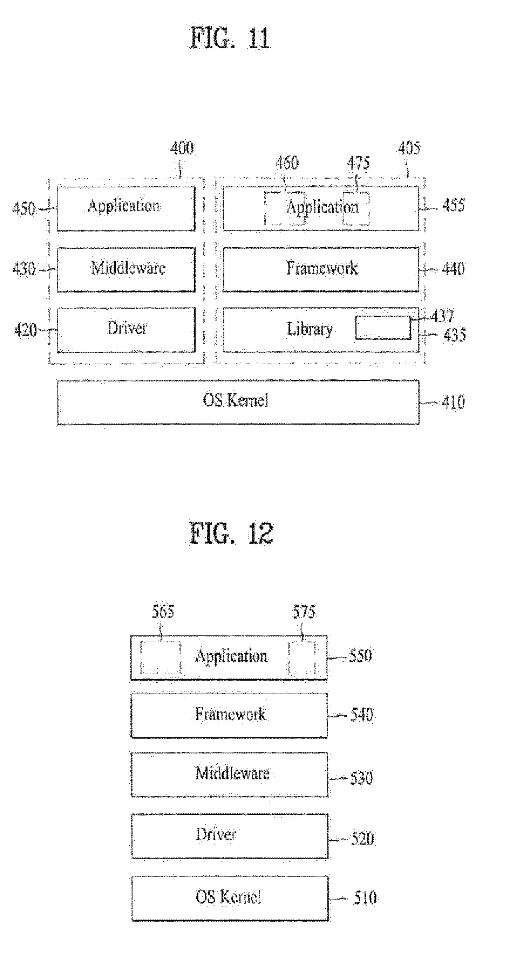

The memory 258 may store programs necessary for the signal processor 260 to process and control signals and temporarily store a video, audio, or data signal received from the external device interface 265 or the network interface 255. addition, the memory 258 ay store platform illustrated in FIGs. 11 and 12, which will be described later.

The signal processor 260 processes an input signal. For example, the signal processor 260 may demultiplex or decode an input video or audio signal. For signal processing, the signal processor 260 may include a video decoder or an audio decoder. The processed video or audio signal may be transmitted to the display device 300 through the external device interface 265.

The user input interface 263 transmits a signal received from the user to the signal processor 260 or a signal received from the signal processor 260 to the user. For example, the user input interface 263 may receive various control signals such as a power on/off signal, an operation input signal, and a setting input signal through a local key (not shown) or the remote controller 200 and output the control signals to the signal processor 260.

The external device interface 265 serves as an interface between the set-top box 250 and an external device that is connected wirelessly or by wire, particularly the display device 300, for data transmission or reception. The external device interface 265 may also interface with an external device such as a game console, a camera, a camcorder, and a computer (e.g. a laptop computer), for data transmission or reception.

The set-top box 250 may further include a media input unit for media playback. The media input unit may be a Blu-ray input unit (not shown), for example. That is, the set-top box 250 may include a Blu-ray player. After signal processing such as demultiplexing or decoding in the signal processor 260, a media signal from a Blu-ray disc may be transmitted to the display device 300 through the external device interface 265 so as to be displayed on the display device 300.

The display device 300 may include a tuner 270, an external device interface 273, a demodulator 275, a memory 278, a controller 280, a user input interface 283, a display 290, and an audio output unit 295.

The tuner 270, the demodulator 275, the memory 278, the controller 280, the user input interface 283, the display 290 and the audio output unit 295 are identical respectively to the tuner 110, the demodulator 120, the memory 140, the controller 170, the user input interface 150, the display 180, and the audio output unit 185 illustrated in FIG. 6 and thus a description thereof is not provided herein.

The external device interface 273 serves as an interface between the display device 300 and a wireless or wired external device, particularly the set-top box 250, for data transmission or reception.

Hence, a video signal or an audio signal received through the set-top box 250 is output through the display 290 or through the audio output unit 295 under control of the controller 280.

Referring to FIG. 8, the configuration of the set-top box 250 and the display device 300 shown in FIG. 8 is similar to that of the set-top box 250 and the display device 300 shown in FIG. 7, except that the tuner 270 and the demodulator 275 reside in the set-top box 250, not in the display device 300. Thus the following description will focus upon such difference.

The signal processor 260 may process a broadcast signal received through the tuner 270 and the demodulator 275. The user input interface 263 may receive a channel selection input, a channel store input, etc.

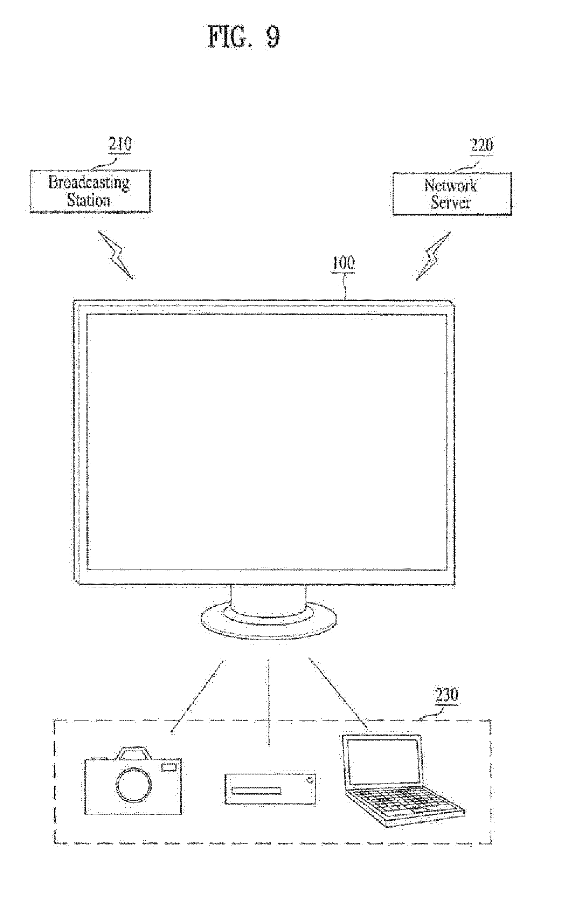

FIG. 9 is a diagram illustrating an operation for communicating with third devices in either of the network TVs according to the embodiments of the present invention. The network TV shown in FIG. 9 may be one of the above-described network TVs according to the embodiments of the present invention.

As shown in FIG. 9, the network TV 100 according to the embodiment of the present invention may communicate with a broadcast station 210, a network server 220, or an external device 230.

The network TV 100 may receive a broadcast signal including a video signal from the broadcast station 210. The network TV 100 may process the audio and video signals of the broadcast signal or the data signal of the broadcast signal, suitably for output from the network TV 100. The network TV 100 may output video or audio based on the processed video or audio signal.

Meanwhile, the network TV 100 may communicate with the network server 220. The network server 200 is capable of transmitting signals to and receiving signals from the network TV 100 over a network. For example, the network server 220 may be a portable terminal that can be connected to the network TV 100 through a wired or wireless base station. In addition, the network server 200 may provide content to the network TV 100 over the Internet. A CP may provide content to the network TV 100 through the network server.

The network TV 100 may communicate with the external device 230. The external device 230 can transmit and receive signals directly to and from the network TV 100 wirelessly or by wire. For instance, the external device 230 may be a media storage or a player. That is, the external device 230 may be any of a camera, a DVD player, a Blu-ray player, a PC, etc.

The broadcast station 210, the network server 220 or the external device 230 may transmit a signal including a video signal to the network TV 100. The network TV 100 may display an image based on the video signal included in the received signal. Also, the network TV 100 may transmit a signal transmitted from the network server 220 to the broadcast station 210 to the external device 230 and may transmit a signal transmitted from the external device 230 to the network TV 100 to the broadcast station 210 or the network server 220. That is, the network TV 100 may transmit content included in signals received from the broadcast station 210, the network server 220, and the external device 230 or may immediately play back the content.

FIG. 10 is a block diagram of the controller 170 shown in FIG. 6. The controller 170 will be described with reference to FIGs. 10 and 6.

The controller 170 may include a DEMUX 310, a video processor 320, an OSD generator 340, a mixer 350, a frame rate converter (FRC) 355, and a formatter 360 according to an embodiment of the present invention. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The stream signal input to the DEMUX 310 may be received from the tuner 110, the demodulator 120 or the external device interface 135.

The video processor 320 may process the demultiplexed video signal. For video signal processing, the video processor 320 may include a video decoder 325 and a scaler 335.

The video decoder 325 decodes the demultiplexed video signal and the scaler 335 scales the decoded video signal so that the video signal can be displayed on the display 180.

The video decoder 325 may be provided with decoders that operate based on various standards.

If the demultiplexed video signal is, for example, an MPEG-2 encoded video signal,

the video signal may be decoded by an MPEG-2 decoder.

On the other hand, if the video signal is an H.264-encoded DMB or DVB-handheld (DVB-H) signal, the video signal may be decoded by an H.264 decoder.

The video signal decoded by the video processor 320 is provided to the mixer 350.

The OSD generator 340 generates an OSD signal autonomously or according to user input. For example, the OSD generator 340 may generate signals by which a variety of information is displayed as graphics or text on the display 180, based on control signals received from the user input interface 150. The generated OSD signal may include various data such as a UI screen, a variety of menu screens, widgets, icons, etc. of the network TV 100.

For example, the OSD generator 340 may generate a signal by which subtitles are displayed for a broadcast image or electronic program guide (EPG)-based broadcasting information.

The mixer 350 may mix the decoded video signal processed by the image processor 220 with the OSD signal generated by the OSD generator 340 and output the mixed signal to the formatter 360. As the decoded broadcast video signal or the externally input signal is mixed with the OSD signal, an OSD may be overlaid on the broadcast image or the externally input image.

The FRC 355 may change the frame rate of an input image signal. For example, a frame rate of 60Hz is converted into a frame rate of 120 or 240Hz. When the frame rate is to be changed from 60Hz to 120Hz, a first frame is inserted between the first frame and a second frame, or a predicted third frame is inserted between the first and second frames. If the frame rate is to be changed from 60Hz to 240Hz, three identical frames or three predicted frames are inserted between the first and second frames. It is also possible to maintain the frame rate of the input image without frame rate conversion.

The formatted 360 changes the format of the signal received from the FRC 355 to suit the display 180. For example, the formatter 360 may convert a received signal into an RGB data signal. The RGB signal may be output in the form of a Low Voltage Differential Signal (LVDS) or mini-LVDS.

The audio processor (not shown) of the controller 170 may process the demultiplexed audio signal. For audio signal processing, the audio processor (not shown) may have a plurality of decoders.

If the demultiplexed audio signal is a coded audio signal, the audio processor (not shown) of the controller 170 may decode the audio signal. For example, the demultiplexed audio signal may be decoded by an MPEG-2 decoder, an MPEG-4 decoder, an Advanced Audio Coding (AAC) decoder, or an AC-3 decoder.

The audio processor (not shown) of the controller 170 may also adjust the base, treble or volume of the audio signal.

The data processor (not shown) of the controller 170 may process the demultiplexed data signal. For example, if the demultiplexed data signal is an encoded data signal such as an electronic program guide (EPG) which includes broadcast information specifying the start time, end time, etc. of scheduled broadcast programs of each channel, the controller 170 may decode the data signal. Examples of an EPG include ATSC-Program and system information protocol (PSIP) information and DVB-Service Information (SI).

ATSC-PSIP information or DVB-SI may be included in the header of the above-described TS, i.e., a 4-byte header of an MPEG-2 TS.

The block diagram of the controller 170 shown in FIG. 10 is an embodiment of the present invention. Depending upon the specifications of the controller 170, the components of the controller 170 may be combined, or omitted. Or new components may be added to the controller 170.

FIG. 11 is a diagram showing an example of a platform architecture for either of the network TVs according to the embodiments of the present invention.

FIG. 12 is a diagram showing another example of a platform architecture for either of the network TVs according to the embodiments of the present invention.

A platform for either of the network TVs according to the embodiments of the present invention may have OS-based software to implement the above-described various operations.

Referring to FIG. 11, a platform for either of the network TVs according to the embodiments of the present invention is of a separate types. The platform may be designed separately as a legacy system platform 400 and a smart system platform 405. An OS kernel 410 may be shared between the legacy system platform 400 and the smart system platform 405.

The legacy system platform 400 may include a stack of a driver 420, middleware 430, and an application layer 450 on the OS kernel 410.

On the other hand, the smart system platform 405 may include a stack of a library 435, a framework 440, and an application layer 455 on the OS kernel 410.

The OS kernel 410 is the core of operating system. When the network TV is driven, the OS kernel 410 may be responsible for operation of at least one of control of hardware drivers, security protection for hardware and processors in the network TV, efficient management of system resources, memory management, hardware interfacing by hardware abstraction, multi-processing, or scheduling associated with multi-processing. Meanwhile, the OS kernel 410 may further perform power management.

The hardware drivers of the OS kernel 410 may include, for example, at least one of a display driver, a Wi-Fi driver, a Bluetooth driver, a USB driver, an audio driver, a power manager, a binder driver, or a memory driver.

Alternatively or additionally, the hardware drivers of the OS kernel 410 may be drivers for hardware devices within the OS kernel 410. The hardware drivers may include a character device driver, a block device driver, and a network device driver. The block device driver may need a buffer for buffering data on a block basis, because data is transmitted on a block basis. The character device driver may not require a buffer since data is transmitted on a basic data unit basis, that is, on a character basis.

The OS kernel 410 may be implemented based on any of various OSs such as Unix (Linux), windows, etc. The OS kernel 410 may be a general-purpose open open-source kernel which can be implemented in other electronic devices.

The driver 420 is interposed between the OS kernel 410 and the middleware 430. Along with the middleware 430, the driver 420 drives devices for operation of the application layer 450. For example, the driver 420 may include a driver(s) for a microcomputer, a display module, a graphics processing unit (GPU), an FRC, a general-purpose input/output (GPIO) pin, a high-definition multimedia interface (HDMI), a system decoder (SDEC) or DEMUX, a video decoder (VDEC), an audio decoder (ADEC), a personal video recorder (PVR), or an Inter-integrated circuit (I2C). These drivers operate in conjunction with the hardware drivers of the OS kernel 410.

In addition, the driver 420 may further include a driver for the remote controller 200, especially a driver of a spatial remote controller to be described below. The remote controller driver may reside in the OS kernel 410 or the middleware 430, instead of the driver 420.

The middleware 430 resides between the OS kernel 410 and the application layer 450. The middleware 430 may mediate between different hardware devices or different software programs, for data transmission and reception between the hardware devices or the software programs. Therefore, the middleware 430 can provide standard interfaces, support various environments, and enable interaction between tasks conforming to heterogeneous communication protocols.

Examples of the middleware 430 in the legacy system platform 400 may include multimedia and hypermedia information coding experts group (MHEG) and advanced common application platform (ACAP) as data broadcasting-related iddleware, PSIP or SI middleware as broadcasting information-related middleware, and DLNA middleware as peripheral device communication-related iddleware.

The application layer 450 that runs atop the middleware 430 in the legacy system platform 400 may include, for example, UI applications associated with various menus in the network TV 100. The application layer 450 on top of the middleware 430 may allow editing and updating over a network by user selection. Through use of the application layer 450, the user may navigate a desired menu by manipulating the remote controller 210 while viewing a broadcast program.

The application layer 450 in the legacy system platform 400 may further include at least one of a TV guide application, a luetooth application, a reservation application, a digital video recorder (DVR) application, and a hotkey application.

In the smart system platform 405, the library 435 is positioned between the OS kernel 410 and the framework 440, forming the basis of the framework 440. For example, the library 435 may include secure socket layer (SSL) (a security-related library), webkit (a web engine-related library), c library (libc), and media framework (a media-related library) specifying, for example, a video format and an audio format. The library 435 may be written in C or C++. Also, the library 435 may be exposed to a developer through the framework 440.

The library 435 may include a runtime 437 with a core Java library and a virtual machine (VM). The runtime 437 and the library 435 form the basis of the framework 440.

The VM may be a virtual machine that enables concurrent execution of a plurality of instances, that is, multi-tasking. For each application of the application layer 455, a VM may be allocated and executed. For scheduling or interconnection between the plurality of instances, the binder driver (not shown) of the OS kernel 410 may operate.

The binder driver and the runtime 437 may connect Java applications to C-based libraries.

The library 435 and the runtime 437 may correspond to the middleware 430 of the legacy system platform.

In the smart system platform 405, the framework 440 includes programs on which applications of the application layer 455 are based. The framework 440 is compatible with any application and may allow component reuse, movement or exchange. The framework 440 may include supporting programs and programs for interconnecting different software components. For example, the framework 440 may include a resource manager, an activity manager related to activities of applications, a notification manager, and a CP for abstracting common information between applications. This framework 440 may be written in Java.

The application layer 455 on top of the framework 440 includes a variety of programs that can be executed and displayed in the network TV 100. The application layer 455 may include, for example, a core application that is a suite providing at least one solution of e-mail, short message service (SMS), calendar, map, or browser functions. The application layer 455 may be written in Java.

In the application layer 455, applications may be categorized into user-undeletable applications 465 stored in the network TV 100 or user-deletable applications 475 that are downloaded from an external device or a network and stored in the network TV.

Using the applications of the application layer 455, a variety of functions such as an Internet telephony service, VoD service, web album service, social networking service (SNS), location-based service (LBS), map service, web browsing service, and application search service may be performed through network access. In addition, other functions such as gaming and schedule management may be performed by the applications.

Referring to FIG. 12, a platform for any of the network TVs according to the embodiments of the present invention is of an integrated type. The integrated-type platform may include an OS kernel 510, a driver 520, middleware 530, a framework 540, and an application layer 550.

The platform shown in FIG. 12 is different from the platform shown in FIG. 11 in that the library 435 shown in FIG. 11 is deleted and the application layer 550 is included as an integrated layer. The driver 520 and the framework 540 correspond to the driver 420 and the framework 440 of FIG. 11, respectively.

The library 435 of FIG. 11 may be incorporated into the middleware 530 of FIG. 12. That is, the middleware 530 may include both the legacy system middleware and the image display system iddleware.

As described before, the legacy system middleware includes MHEG or ACAP as data broadcasting-related middleware, PSIP or SI middleware as broadcasting information-related middleware, and DLNA middleware as peripheral device communication-related iddleware, and the image display system middleware includes SSL as a security-related library, webkit as a web engine-related library, libc, and media framework as a media-related library. The middleware 530 may further include the above-described runtime.

The application layer 550 may include a menu-related application, a TV guide application, a reservation application, etc. as legacy system applications, and e-mail, SMS, a calendar, a map, and a browser as image display system applications.

In the application layer 550, applications may be categorized into user-undeletable applications 565 that are stored in the network TV 100 and user-installable or user-deletable applications 575 that are downloaded from an external device or a network and stored in the network TV.

Based on the plateform shown in FIGs. 11 and 12, various application programming interfaces (API) and software development kins (SDK) necessary to develop an application may be opened. Meanwhile, the APIs may be implemented by calling a function providing a connection to a subroutine for execution within a program.

For example, a source associated with a hardware driver in the OS kernel 410, such as a display driver, a WiFi driver, a Bluetooth driver, a USB driver or an audio driver, may be opened, a source associated with the driver 420 such as a microcomputer, a display module, a graphics processing unit (GPU), a frame rate converter (FRC), an SDEC, a VDEC, a ADEC or a pointing device may be opened, or a source associated with PSIP or SI middleware or DLNA middleware associated with broadcast information may be opened.

Due to various opened APIs, developers can develop applications executed within the network TV 100 or applications for controlling the operation of the network TV 100 based on the platforms shown in FIGs. 11 and 12.

The platform. shown in FIGs. 11 and 12 may be general-purpose ones that can be implemented in many other electronic devices as well as in network TVs. The platforms of FIGs. 11 and 12 may be stored or loaded in the memory 140, the controller 170, or any other processor (not shown) or may be stored or load in the SI & metadata DB 711, the UI manager 714 or the service manager 713 shown in FIG. 5. To execute applications, an additional application processor (not shown) may be further provided.

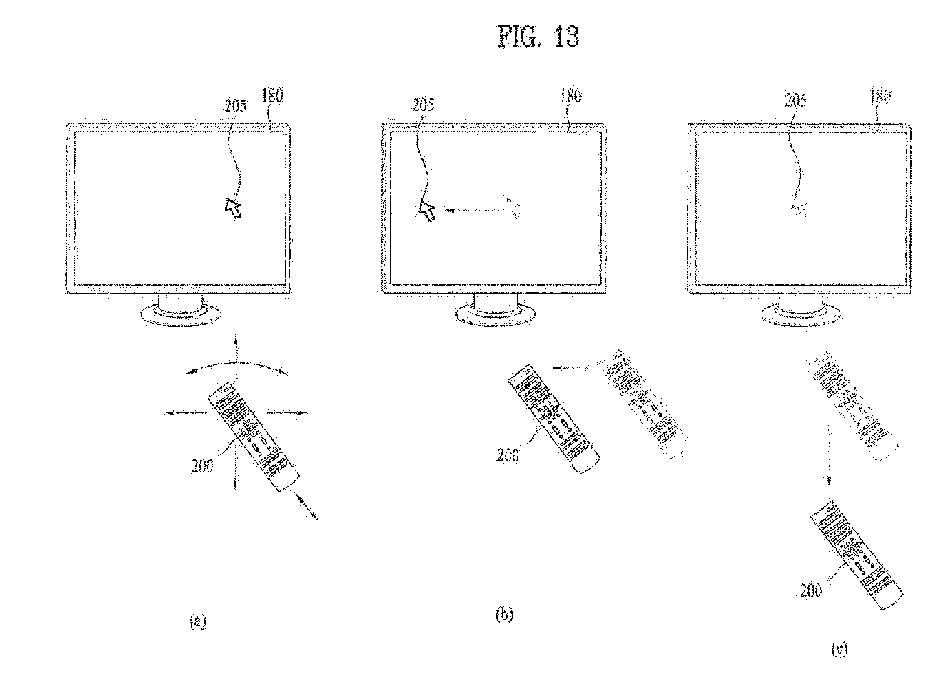

FIG. 13 illustrates a method for controlling either of the network TVs according to the embodiments of the present invention using a remote controller.

FIG. 13(a) illustrates a pointer 205 representing movement of the remote controller 200 displayed on the display 180.

The user may move or rotate the remote controller 200 up and down, side to side (FIG. 13(b)), and back and forth (FIG. 13(c)). The pointer 205 displayed on the display 180 of the network TV moves according to the movement of the remote controller 200. Since the pointer 205 moves in accordance with the movement of the remote controller 200 in a 3D space as shown in FIG. 13, the remote controller 200 may be referred to as a spatial remote controller.

Referring to FIG. 13(b), if the user moves the remote controller 200 to the left, the pointer 205 moves to the left on the display 180.

A sensor of the remote controller 200 detects movement of the remote controller 200 and transmits motion information of the remote controller 200 to the network TV. Then, the network TV calculates the coordinates of the pointer 205 from the motion information of the remote controller 200. The network TV then displays the pointer 205 at the calculated coordinates.

Referring to FIG. 13(c), while pressing a predetermined button of the remote controller 200, the user moves the remote controller 200 away from the display 180. Then, a selected area corresponding to the pointer 205 may be zoomed in on and enlarged on the display 180. On the contrary, if the user moves the remote controller 200 toward the display 180, the selected area corresponding to the pointer 205 is zoomed out and thus contracted on the display 180. On the contrary, when the remote controller 200 moves away from the display 180, the selected area may be zoomed out and when the remote controller 200 approaches the display 180, the selected area may be zoomed in.

With the predetermined button of the remote controller 200 pressed, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The movement speed and direction of the pointer 205 may correspond to the movement speed and direction of the remote controller 200.

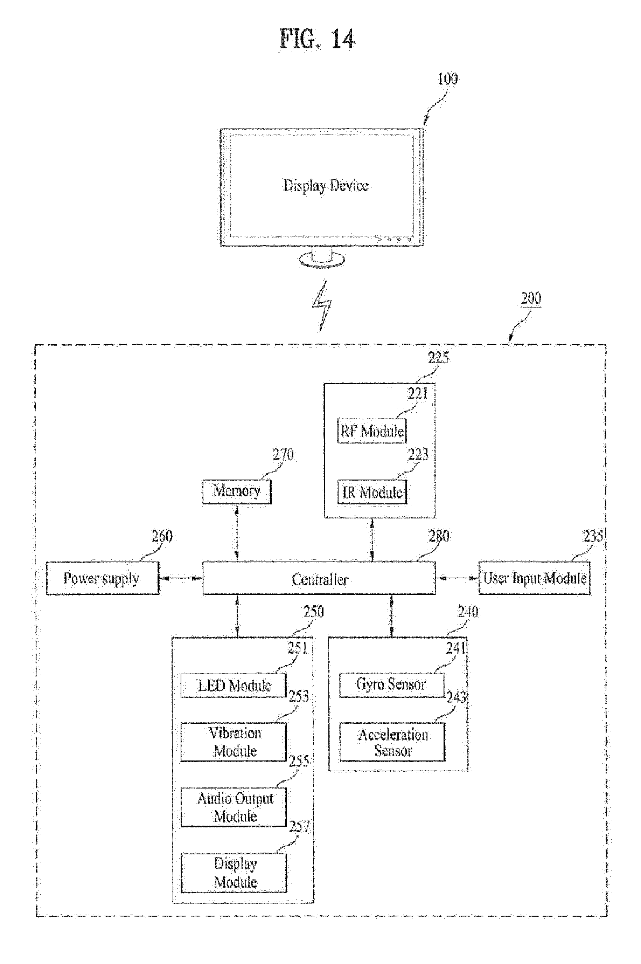

The pointer of the present specification is an object displayed on the display 180 in correspondence with the movement of the remote controller 200. Therefore, the pointer 205 may have various shapes other than the arrow illustrated in FIG. 14. For example, the pointer 205 may be a dot, a cursor, a prompt, a thick outline, etc. The pointer 205 may be displayed across a plurality of points, such as a line and a surface, as well as at a single point on horizontal and vertical axes.

FIG. 14 is a detailed block diagram of the remote controller in either of the network TVs according to an embodiment of the present invention.

Referring to FIG. 14, the remote controller 200 may include a wireless communication module 225, a user input unit 235, a sensor unit 240, an output unit 250, a power supply 260, a memory 270, and a controller 280.

The wireless communication module 225 transmits signals to and receives signals from either of the above-described network TVs according to the embodiments of the present invention, that is, the network TV. Among the network TVs according to the embodiments of the present invention, one network TV 100 will be described with regard to an example.

The remote controller 200 may include an RF module 221 for transmitting RF signals to and receiving RF signals from the network TV 100 according to an RF communication standard. The remote controller 200 may also include an IR module 223 for transmitting IR signals to and receiving IR signals from the network TV 100 according to an IR communication standard.

In the present embodiment, the remote controller 200 transmits motion information representing movement of the remote controller 200 to the network TV 100 through the RF module 221.

The remote controller 200 may also receive signals from the network TV 100 through the RF module 221. As needed, the remote controller 200 may transmit commands such as a power on/off command, a channel switch command, or a volume change command to the network TV 100 through the IR module 223.

The user input unit 235 may include a keypad, a plurality of buttons, a touchpad or a touchscreen. The user may enter commands associated with the network TV 100 to the remote controller 200 by manipulating the user input unit 235. If the user input unit 235 includes a plurality of hard buttons, the user may input various commands associated with the network TV 100 to the remote controller 200 by pressing the hard buttons. Alternatively or additionally, if the user input unit 235 includes a touchscreen displaying a plurality of soft keys, the user may input various commands associated with the network TV 100 to the remote controller 200 by touching the soft keys. The user input unit 235 may also include various input tools other than those set forth herein, such as a scroll key and/or a jog wheel, which should not be construed as limiting the present invention.

The sensor unit 240 may include a gyro sensor 241 or an acceleration sensor 243.

The gyro sensor 241 may sense movement of the remote controller 200.

For example, the gyro sensor 241 may sense the movement of the remote controller 200 in X, Y, and Z-axis directions. The acceleration sensor 243 may sense the speed of the remote controller 200. The senfsor unit 240 may further include a distance sensor for sensing the distance between the remote controller 200 and the display 180.

The output unit 250 may output a video or audio signal corresponding to manipulation of the user input unit 235 or corresponding to a signal received from the network TV 100. The user may readily identify whether the user input unit 235 has been manipulated or whether the network TV 100 has been controlled, based on the video or audio signal output by the output unit 250.

The output unit 250 may include a light emitting diode (LED) module 251 which is turned on or off whenever the user input unit 235 is manipulated or whenever a signal is received from or transmitted to the network TV 100 through the wireless communication module 225, a vibration module 253 which generates vibrations, an audio output module 255 which outputs audio data, or a display module 257 which outputs video data.

The power supply 260 supplies power to the remote controller 200. If the remote controller 200 remains stationary for a predetermined time or longer, the power supply 260 may, for example, reduce or shut off supply of power to the spatial remote controller 200 in order to save power. The power supply 260 may resume power supply if a predetermined key of the remote controller 200 is manipulated.

The memory 270 may store various types of programs and application data necessary to control or drive the remote controller 200. The remote controller 200 may wirelessly transmit signals to and receive signals from the network TV 100 over a predetermined frequency band with the aid of the RF module 221. The controller 280 of the remote controller 200 may store information regarding the frequency band used for the remote controller 200 to wirelessly transmit signals to and wirelessly receive signals from the paired network TV 100 in the memory 270, for later use.

The controller 280 provides overall control to the remote controller 200. The controller 280 may transmit a signal corresponding to a key manipulation detected from the user input unit 235 or a signal corresponding to motion of the remote controller 200, as sensed by the sensor unit 240, to the network TV 100.

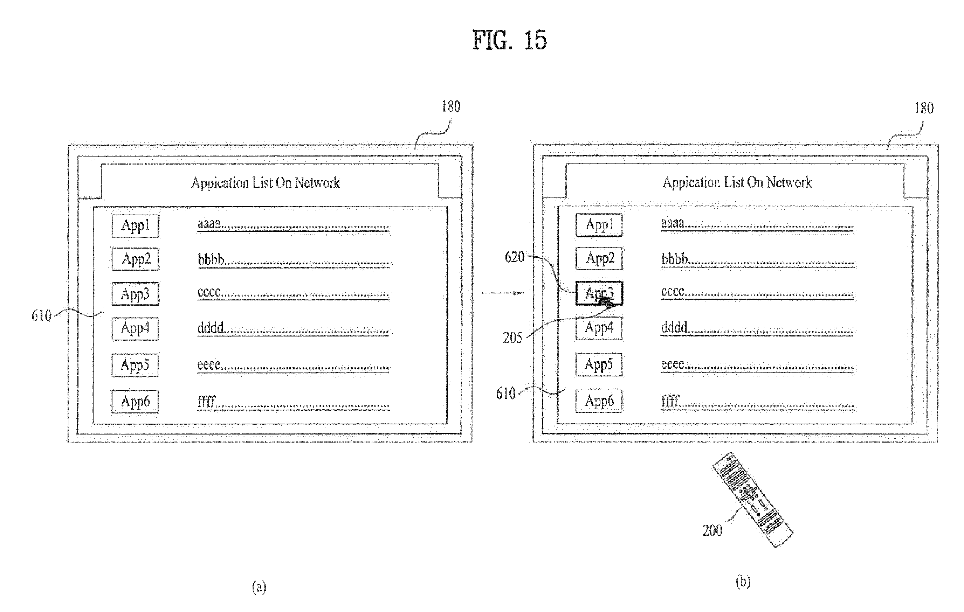

FIG. 15 is a diagram showing a first embodiment of a UI in either of the network TVs according to embodiments of the present invention.

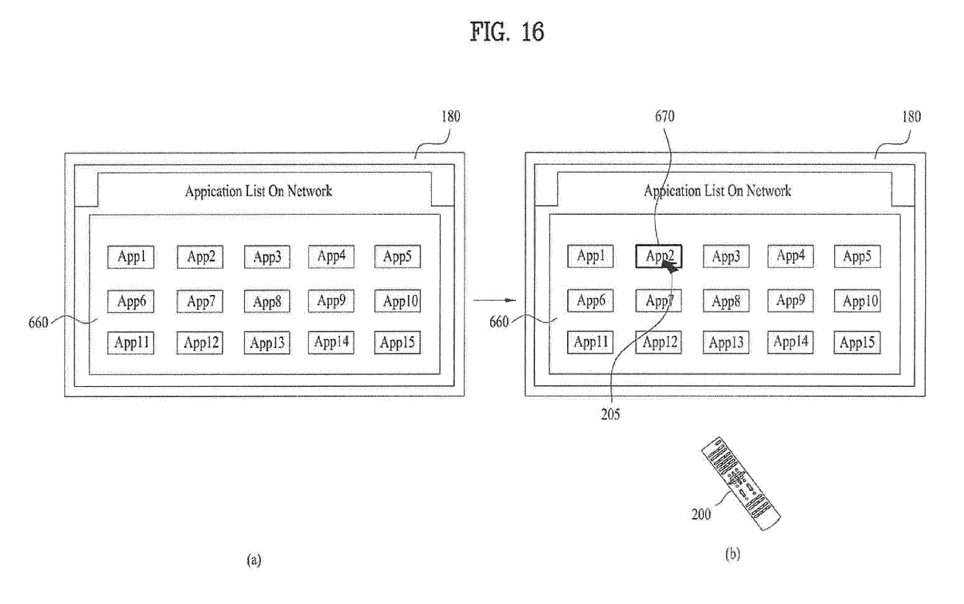

FIG. 16 is a diagram showing a second embodiment of a UI either of the network TVs according to the embodiments of the present invention..

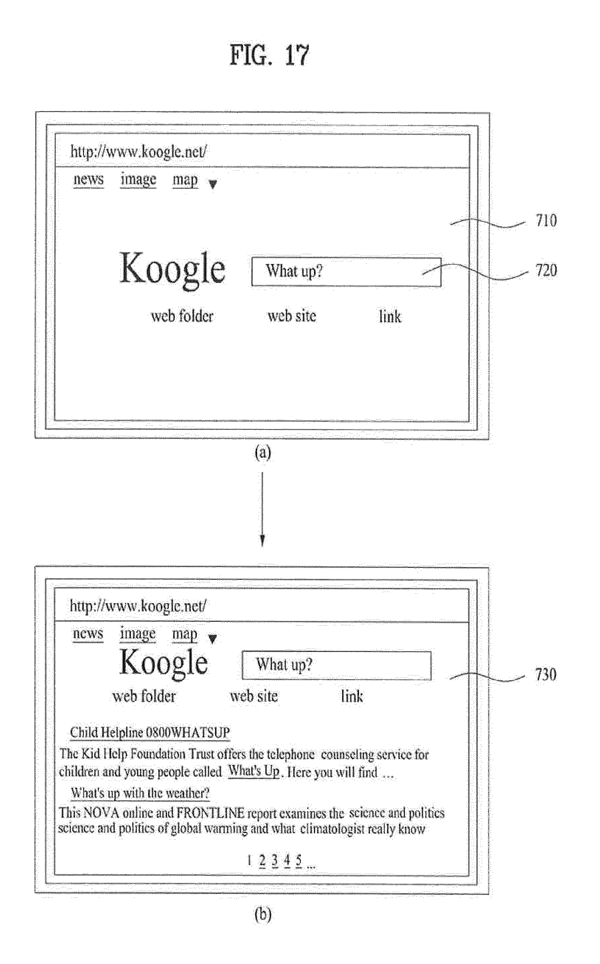

FIG. 17 is a diagram showing a third embodiment of a UI either of the network TVs according to the embodiments of the present invention.

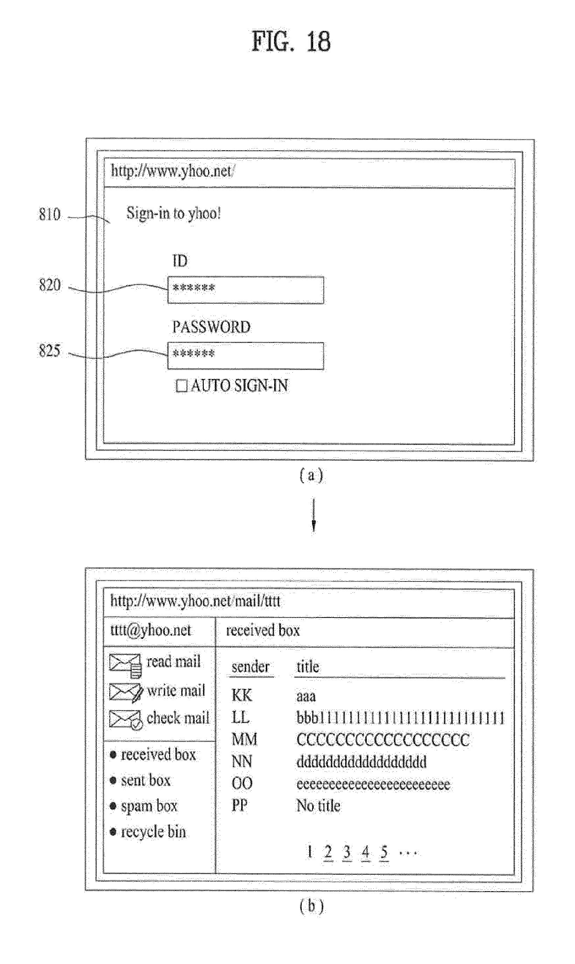

FIG. 18 is a diagram showing a fourth embodiment of a UI either of the network TVs according to the embodiments of the present invention.

Referring to FIG. 15, an application list available from a network is displayed on the display 180. A user may directly access a CP or an NP directly, search for various applications, and download the applications from the CP or the NP.

Specifically, FIG. 15(a) illustrates an application list 610 available in a connected server, displayed on the display 180. The application list 610 may include an icon representing each application and a brief description of the application. Because each of the network TVs according to the embodiments of the present invention is capable of full browsing, it may enlarge the icons or descriptions of applications received from the connected server on the display 180. Accordingly, the user can readily identify applications, which will be described later.

FIG. 15(b) illustrates selection of one application 620 from the application list 610 using the pointer 205 of the remote controller 200. Thus, the selected application 620 may be readily downloaded.

FIG. 16 illustrates an application list available in the network TV, displayed on the display 180. Referring to FIG. 16(a), when the user selects an application list view menu by manipulating the remote controller 200, a list of applications 660 stored in the network TV according to each of the embodiments of the present invention is displayed on the display 180. While only icons representing the applications are shown in FIG. 16, the application list 660 may further include brief descriptions of the applications, like the application list 610 illustrated in FIG. 15. Therefore, the user can readily identify the applications.

FIG. 16(b) illustrates selection of one application 670 from the application list 660 using the pointer 205 of the remote controller 200. Thus, the selected application 670 may be readily executed.

While it is shown in FIGS. 15 and 16 that the user selects a desired item by moving the pointer 205 using the remote controller 200, the application may be selected in many other ways. For example, the user may select a specific item using a cursor displayed on the screen by a combined input of an OK key and a direction key of a local key (not shown) or the remote controller 200.

In another example, if the remote controller has a touch pad, the pointer 205 moves on the display 180 according to touch input of the touch pad. Thus the user may select a specific item using the touch-based pointer 205.

FIG. 17 illustrates a web page displayed on the display of the network TV.

Specifically, FIG. 17(a) illustrates a web page 710 with a search window 720, displayed on the display 180. The user may enter a character into the search window 720 by use of character keys (not shown) of a keypad displayed on a screen, character keys (not shown) of local keys, or character keys (not shown) of the remote controller 200.

FIG. 17(b) illustrates a search result page 730 having search results matching a keyword entered into the search window, displayed on the display 180. Since the network TVs according to the embodiments of the present invention are capable of fully browsing a Web page, the user can readily read the Web page.

FIG. 18 illustrates another Web page displayed on the display 180.

Specifically, FIG. 18(a) illustrates a mail service page 810 including an ID input window 820 and a password input window 825, displayed on the display 180. The user may enter a specific numeral and text into the ID input window 820 and the password input window 825 using a keypad (not shown) displayed on the mail service page, character keys (not shown) of local keys, or character keys (not shown) of the remote controller. Hence, the user can log in to a mail service.

FIG. 18(b) illustrates a mail page 830 displayed on the display 180, after log-in to the mail service. For example, the mail page 830 may contains items "read mail", "write mail", "sent box", "received box", "recycle bin", etc. In the "received box" item, mail may be ordered by sender or by title.

The network TVs according to the embodiments of the present invention are capable of full browsing when displaying a mail service page. Therefore, the user can use the mail service conveniently.

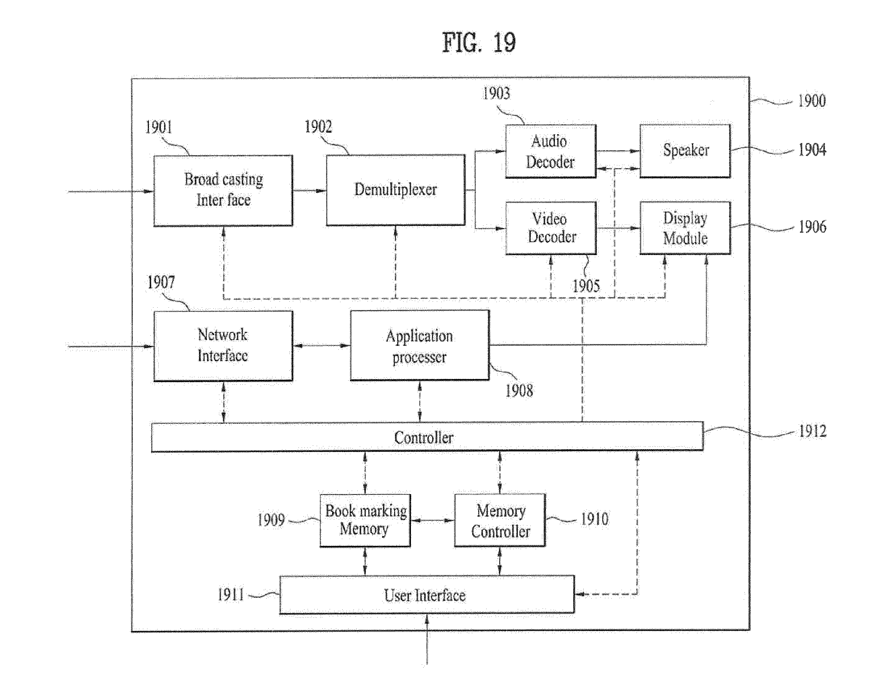

FIG. 19 is a block diagram of the configuration of a network TV 1900 for bookmarking at least one or more items according to an embodiment of the present invention. Hereinafter, an operation for bookmarking at least one or more items by modules of the network TV 1900 according to the embodiment of the present invention will be described with reference to FIG. 19. However, the modules shown in FIG. 19 correspond to the modules for explanation of an embodiment of the present invention and the scope of the invention is defined according to claims in principle.

Furthermore, the modules shown in FIG. 19 may be designed in the form of software or hardware or in the combination thereof.

As shown in FIG. 19, the network TV 1900 according to the embodiment of the present invention includes a broadcast interface 1901, a demultiplexer 1902, an audio decoder 1903, a speaker 1904, a video decoder 1905, a display 1906, a network interface 1907, an application processor 1908, a bookmarking memory 1909, a memory controller 1910, a user interface 1911, and a controller 1912. The network TV 1900 may be, for example, a smart TV, a web TV, an Internet TV, an IPTV, an HBBTV, or the like. The network TV 1900 is described with regard to a network TV for convenience of description. However, it is possible to implement embodiments of the present invention in other multimedia devices.

The broadcast interface 1901 is connected to an external broadcast station or a server to receive a general broadcast program and so on. The demultiplexer 1902 demultiplexes audio data and video data of a general broadcast program received from the broadcast interface 1901. Furthermore, the audio decoder 1903 decodes the audio data received from the demultiplexer 1902 and outputs the audio data to the speaker 1904. The video decoder 1905 decodes the video data received from the demultiplexer 1902 and outputs the video data to the display 1906.

The network interface 1907 is connected to, for example, an external Internet service to receive a variety of types of applications. In addition, the application processor 1908 performs data processing so as to output the received application through the display 1906.

A GUI that facilitates rapid access to a specific item desired by a user to check the specific item using the network TV 1900 shown in FIG. 19 will be described below.

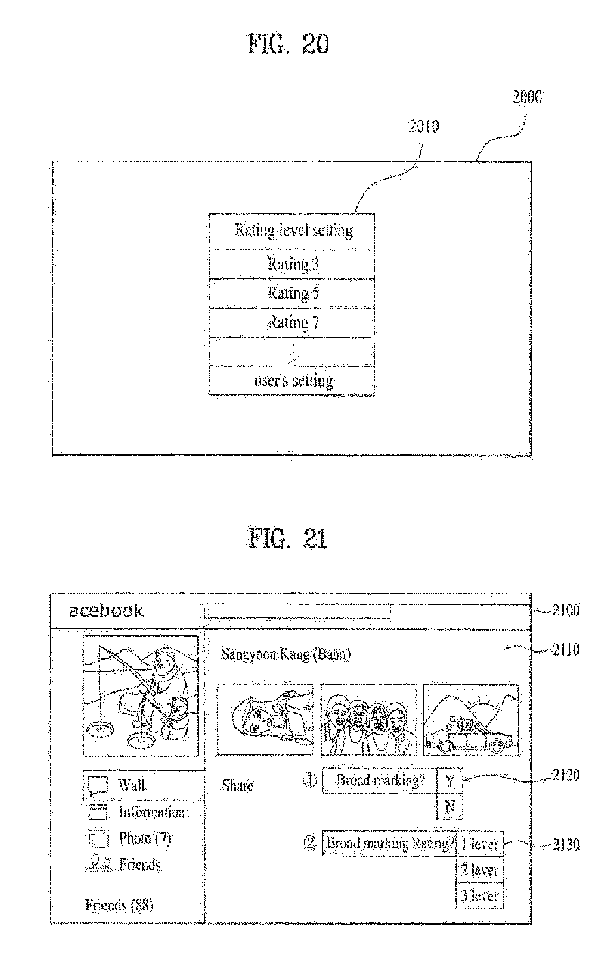

The user interface 1911 is designed to receive a first command for setting bookmarking of a currently executed item and a second command for selecting a rating of the bookmarked item, which will be described in more detail with reference to FIGs. 20 and 21.

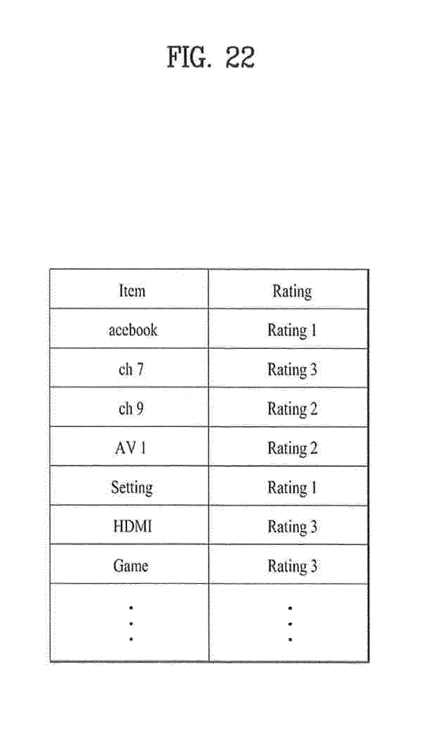

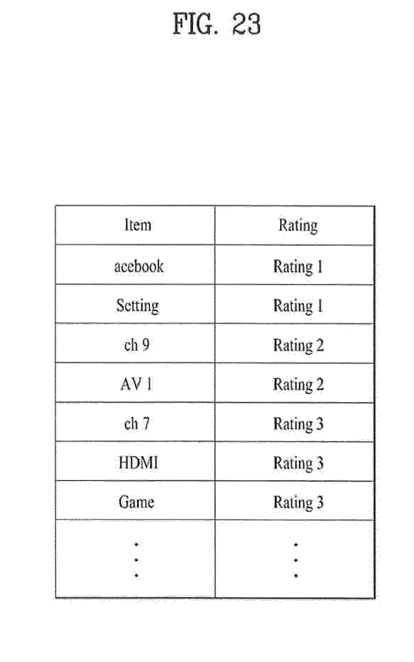

Furthermore, the bookmarking memory 1909 stores information for identification of the bookmarked item having the selected rating according to the received first and second commands, which will be described in more detail with reference to FIGs. 22 and 23.

When the memory controller 1910 receives a third command for listing at least one or more bookmarked items through the user interface 1911, the memory controller 1910 accesses the bookmarking memory 1909.

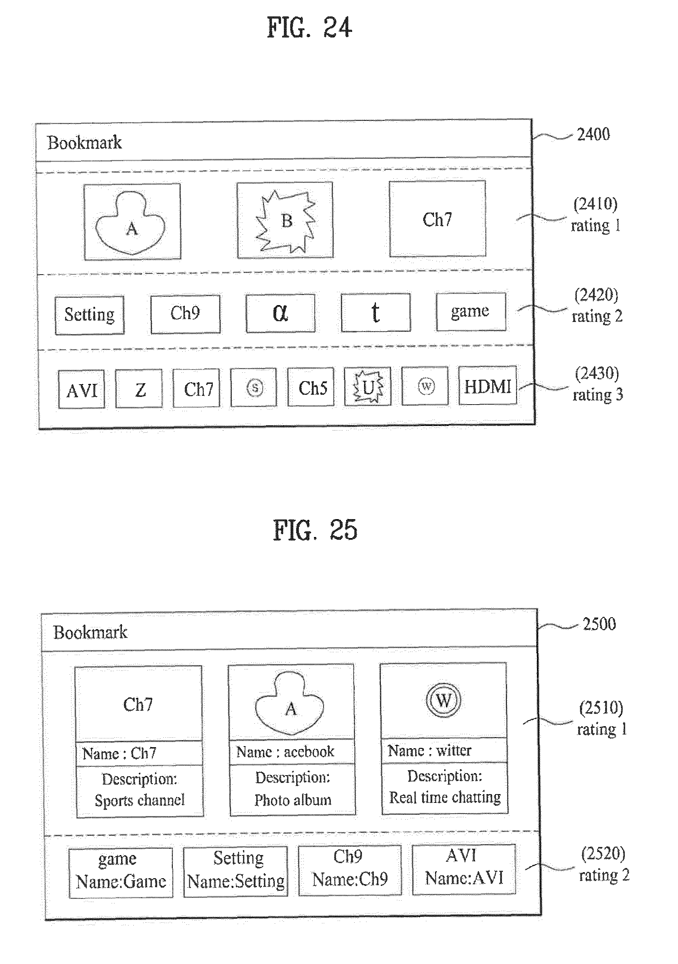

In addition, the display 1906 is designed to display a first item having a first rating and a second item having a second rating separately from each other according to a rating for each respective item stored in the bookmarking memory 1909, which will be described in more detail with reference to FIGs. 24 through 30.

That is, according to a conventional method, a web site can be readily found by bookmarking only a web site in a PC. However, this method is not effective in a network TV in which various contents and items are present. Thus, the present disclosure proposes a method of rapidly accessing and re-consuming a variety of types of items by designing a network TV as illustrated in FIG. 19.

In particular, according to an embodiment of the present invention, an item subjected to bookmarking is not limited to a web site and thus may be, for example, application, a broadcast channel, an external input source, a web site, and so on.

The external input source may be, for example, AV1, AV2, a component, or HDMI. In addition, functions (e.g., setting and channel list) related to unique functions of a TV may also be the aforementioned item. In addition, content stored in a USB media or BBTV content provided by a CP may be the aforementioned item.

FIG. 20 is a diagram illustrating an OSD image for setting a rating level by a network TV according to an embodiment of the present invention. Hereinafter, the OSD image for setting the rating level by the network TV according to the embodiment of the present invention will be described with reference to FIG. 20.

As described above, an embodiment of the present invention is advantageous in terms of random setting of a rating according to user preference as well as a simple bookmarking process. For example, as illustrated in FIG. 20, a network TV 2000 according to an embodiment of the present invention may generate and display a list 2010 for determination of a total rating number of items. The user may set a rating level for sorting items to be bookmarked using the displayed list 2010. Of course, the network TV 2000 may be designed to determine a specific level as a default value instead of a UI illustrated in FIG. 20.

FIG. 21 is a diagram illustrating an OSD image that allows a network TV 2100 to set bookmarking according to an embodiment of the present invention. Hereinafter, the OSD image that allows the network TV 2100 to set bookmarking will be described with regard to an embodiment of the present invention with reference to FIG. 21.

As illustrated in FIG. 21, the network TV 2100 according to the embodiment of the present invention outputs an image 2110 according to execution of a specific item. In this case, when a first OSD image 2120 for asking whether bookmarking is performed is output, if a user selects bookmarking of a currently executed item, a second OSD image 2130 for selecting a bookmarking rating is output. Thus, the network TV 2100 is advantageous in that, according to the user preference, the user may determine a bookmarking level of the currently executed item as any one of a first rating, a second rating, and a third rating. Of course, although FIG. 21 illustrates a case in which a level is determined as three ratings, the number is purely exemplary and the scope of the present disclosure is not limited to the aforementioned number.

In consideration of a case in which a user of a network TV uses the aforementioned item and reuses the same item in the future, the network TV is designed to apply a bookmarking rating according to reuse possibility. A rating level may preset to a third rating, a fifth rating, a seventh rating, a seventh rating, a tenth rating, etc. by the user or use other default values.

Bookmarked items are displayed in an optimized form to the user. For example, an item that acquires a high level rating is displayed at a higher portion compared with an item that acquires a low level rating. That is, conventionally, when there are three items set to Rating 1, Rating 2, Rating 3, Rating 4, and Rating 5, 15 items may be displayed in one image. However, the network TV is designed to sequentially display items from an item having highest priority so as to improve accessibility to an item considered to be important by the user.

FIG. 22 is a diagram illustrating an example of a relationship between a rating and an item stored in a bookmarking memory of a network TV according to an embodiment of the present invention. Hereinafter, an example of the relationship between the rating and the item stored in the bookmarking memory of the network TV will be described with regard to an embodiment of the present invention with reference to FIG. 22.

When a user determines whether a currently executed item is bookmarked and sets a rating using an OSD shown in FIG. 21, the bookmarking memory of the network TV stores a mapping table of a rating for each respective item, as illustrated in FIG. 22. As illustrated in FIG. 22, acebook is set to Rating 1 of application, ch 7 is set to Rating 3, and ch 9 is set to Rating 2.

In addition, external AV input 1 is set to Rating 2, Setting is set to Rating 1, external HDMI input is set to Rating 3, and game application is set to Rating 3.

FIG. 23 is a diagram illustrating another example of a relationship between a rating and an item stored in a bookmarking memory of a network TV according to an embodiment of the present invention. Hereinafter, another example of the relationship between the rating and the item stored in the bookmarking memory of the network TV will be described with regard to an embodiment of the present invention with reference to FIG. 23.

Compared with FIG. 22, FIG. 23 is different from FIG. 22 in that bookmarked items are aligned according to ratings thereof. That is, an item "acebook" and an item "Setting" having Rating 1 of highest priority are positioned in a highest portion of the mapping table, and an item "ch 9" and an item "AV 1" having Rating 2 of intermediate priority are positioned in an intermediate portion of the mapping table.

In addition, an item "ch 7" and an item "HDMI" having Rating 3 of lowest priority, and an item "Game" are positioned in a lowest portion of the mapping table. In addition, a network TV is designed to generate an OSD as illustrated in FIGs. 24 through 30 when items bookmarked according to a rating are aligned as illustrated in FIG. 23.

FIG. 24 is a diagram illustrating a case in which a network TV 2400 according to an embodiment of the present invention outputs a bookmarked list, according to a first embodiment of the present invention. Hereinafter, an image in which the network TV 2400 according to the embodiment of the present invention outputs bookmarked items with different icon sizes according to ratings will be described with reference to FIG. 24.

As illustrated in FIG. 24, the network TV 2400 according to the embodiment of the present invention sets a size of each icon 2410 corresponding to items having a rating of first priority to a first size according to a rating for each respective item stored in the bookmarking memory.

The network TV 2400 sets a size of each icon 2420 corresponding to items having a rating of second priority to a second size according to a rating for each respective item stored in the bookmarking memory.

In addition, the network TV 2400 sets a size of each icon 2440 corresponding to items having a rating of third priority to a third size according to a rating for each respective item stored in the bookmarking memory. As illustrated in FIG. 24, the network TV 200 is designed such that as a rating decreases (it is assumed that Rating 1 is a highest rating and Rating 3 is a lowest rating), the size of an icon decreases.

Thus, the network TV 2400 may be designed such that items having a rating of high priority occupy regions having relatively high selectivity and visibility, and thus, a user can stereoscopically use bookmarked items.

FIG. 25 is a diagram illustrating a case in which a network TV 2500 according to an embodiment of the present invention outputs a bookmarked list, according to a second embodiment of the present invention. Hereinafter, an image in which the network TV 2500 according to the embodiment of the present invention outputs bookmarked items with different descriptions according to ratings will be described with reference to FIG. 25.

As illustrated in FIG. 25, the network TV 2500 according to the embodiment of the present invention displays a title and description of each icon corresponding to items having a rating of first priority in a first region 2510 according to a rating for each respective item stored in the bookmarking memory.

The network TV 2500 displays a title and description of each icon corresponding to items having a rating of second priority in a second region 2520 according to a rating for each respective item stored in the bookmarking memory.

That is, with regard to items having a high rating, related short description thereof as well as a title thereof may be provided so as to ensure relatively high selectivity and visibility of items having a high rating. However, only a title is provided with regard to items with a low rating. In addition, according to an embodiment of the present invention, although not illustrated in FIG. 25, different font sizes of text may be set according to a rating and thus items for respective ratings may be readily identified.

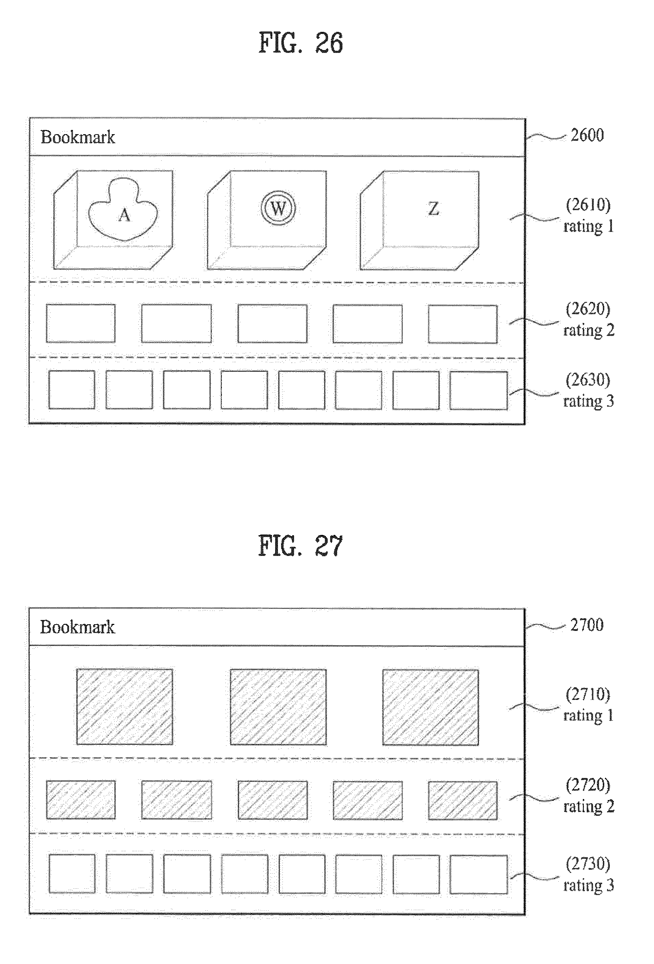

FIG. 26 is a diagram illustrating a case in which a network TV 2600 according to an embodiment of the present invention outputs a bookmarked list, according to a third embodiment of the present invention. Hereinafter, an image in which the network TV 2500 according to the embodiment of the present invention outputs bookmarked items with different dimensions according to ratings will be described with reference to FIG. 26.

As illustrated in FIG. 26, the network TV 2600 according to an embodiment of the present invention 3D-graphically displays icons 2610 corresponding to items having a rating of highest priority. On the other hand, the network TV 2600 2D-graphically displays icons 2620 and 2630 corresponding to items having a rating of intermediate or lowest priority.

Thus, a user may rapidly select an item preferred by the user simply by comparing dimensions instead of checking icons of numerous bookmarked items.

FIG. 27 is a diagram illustrating a case in which a network TV 2700 according to an embodiment of the present invention outputs a bookmarked list, according to a fourth embodiment of the present invention. Hereinafter, an image in which the network TV 2700 according to the embodiment of the present invention outputs bookmarked items with different contrast ratios according to ratings will be described with reference to FIG. 27.

As illustrated in FIG. 27, the network TV 2700 according to an embodiment of the present invention displays each icon 2710 corresponding to items having a rating of highest priority with a darkest contrast ratio. The network TV 2700 displays each icon 2720 corresponding to items having a rating of intermediate priority with an intermediate contrast ratio. On the other hand, the network TV 2700 displays each icon 2730 corresponding to items having a rating of lowest priority with a brightest contrast ratio. Of course, according to an embodiment of the present invention, a contrast ratio may be designed in an opposite way to the case illustrated in FIG. 27.

Thus, a user may rapidly select an item preferred by the user simply by comparing contrast ratios instead of checking icons of numerous bookmarked items.

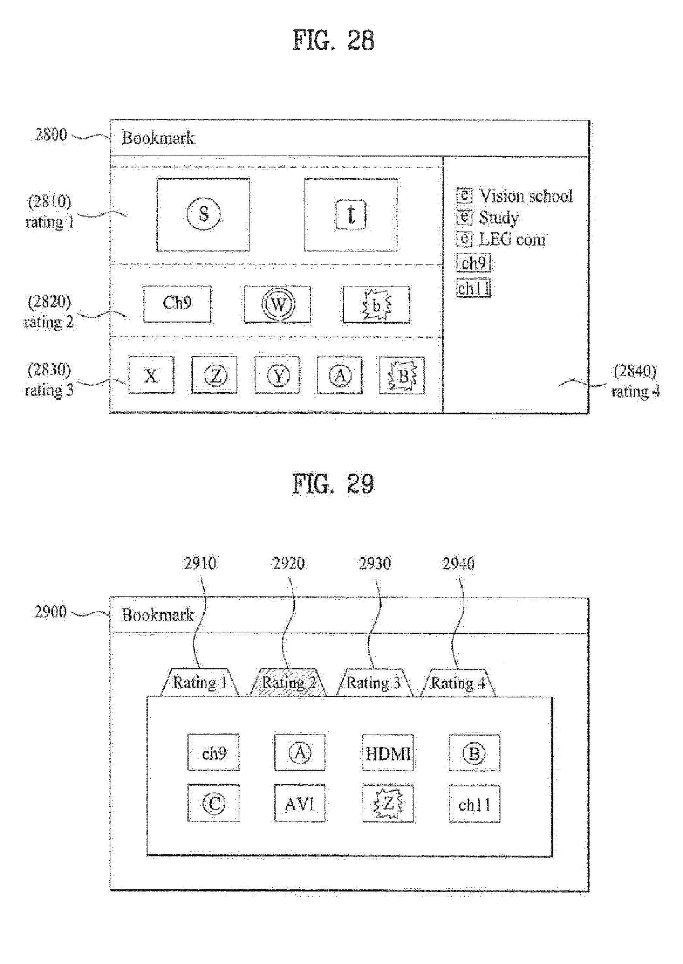

FIG. 28 is a diagram illustrating a case in which a network TV 2800 according to an embodiment of the present invention outputs a bookmarked list, according to a fifth embodiment of the present invention. Hereinafter, an image in which the network TV 2800 according to the embodiment of the present invention outputs bookmarked items with different types according to ratings will be described with reference to FIG. 28.

As illustrated in FIG. 28, the network TV 2800 according to an embodiment of the present invention displays each icon 2810 corresponding to items having a rating of highest priority with a largest size.

In addition, the network TV 2800 displays each icon 2820 corresponding to items having Rating 2 with an intermediate size. The network TV 2800 displays each icon 2830 corresponding to items having Rating 3 with a smallest size.

The network TV 2800 is designed to have different methods of displaying items corresponding to Ratings 1 through 3 and an item corresponding to Rating 4. That is, items corresponding to Rating 4 are output in the form of text instead of in the form of icon. As illustrated in FIG. 28, the network TV 2800 displays items having Rating 4 in a text form 2840.

Thus, the selectivity and visibility of items having relatively high ratings (e.g., Ratings 1 through 3) may be increased, and an item (e.g., Rating 4) having a relatively low rating may be displayed in the text form. Thus, as many as possible bookmarking items can be displayed at one time.

FIG. 29 is a diagram illustrating a case in which a network TV 2900 according to an embodiment of the present invention outputs a bookmarked list, according to a sixth embodiment of the present invention. Hereinafter, an image in which the network TV 2900 according to the embodiment of the present invention collects and displays bookmarked items according to ratings will be described with reference to FIG. 29.

Thus far, the method of displaying items having all ratings in one screen has been described with reference to FIGs. 24 through 28. However, when the number of bookmarked items is increased, it is actually impossible to display the items in one screen and visibility is lowered.

Thus, as illustrated in FIG. 29, the network TV 2900 according to the embodiment of the present invention is designed to separately manage items belonging to the same ratings using a tab method.

The network TV 2900 is designed to display a first tab 2910 formed by collecting items having a rating with first priority, a second tab 2920 formed by collecting items having a rating with second priority, a third tab 2930 formed by collecting items having ratings with third priority, and a fourth tab 2940 formed by collecting items having ratings with fourth priority.

In addition, when a specific tab, that is, the second tab 2930 is selected among the displayed tabs, the network TV 2900 displays icons corresponding to items belonging to the selected specific tab.

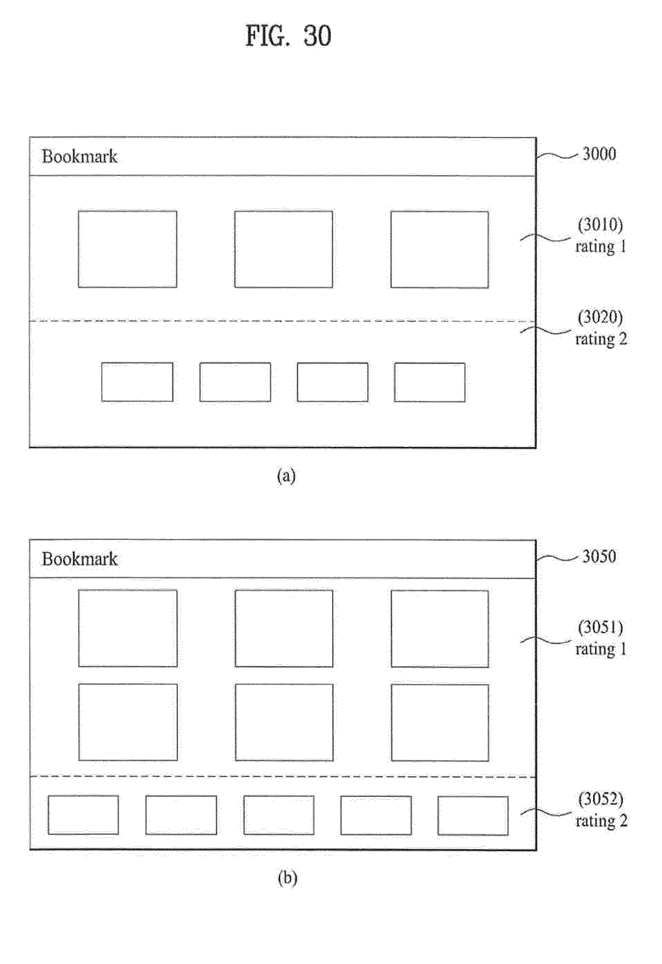

FIG. 30 is a diagram illustrating a case in which a network TV according to an embodiment of the present invention outputs a bookmarked list, according to a seventh embodiment of the present invention. Hereinafter, a process of changing a size for each respective rating of an icon corresponding to a bookmarked item by the network TV 3000 will be described with reference to FIG. 30.

As illustrated in FIG. 30(a), the network TV 3000 according to the embodiment of the present invention outputs each icon 3010 corresponding to items having Rating 1 with a first size and each icon 3020 corresponding to items having Rating 2 with a second size.

As illustrated in FIG. 30(b), a network TV 3050 according to an embodiment of the present invention outputs each icon 3051 corresponding to items having Rating 1 with a third size and each icon 3051 corresponding to items having Rating 2 with a fourth size.

That is, comparing FIGs. 30(a) and 30(b), the number of items of Rating 1 is assumed to be 3 in FIG. 30(a) and the number of items of Rating 1 is assumed to be 6 in FIG. 30(b). Thus, according to an embodiment of the present invention, the network TV 3050 of FIG. 30(b) is designed such that the number of items having Rating 2 is further reduced compared with the network TV 3000 of FIG. 30(a) and thus all bookmarking items are displayed in one screen if possible.

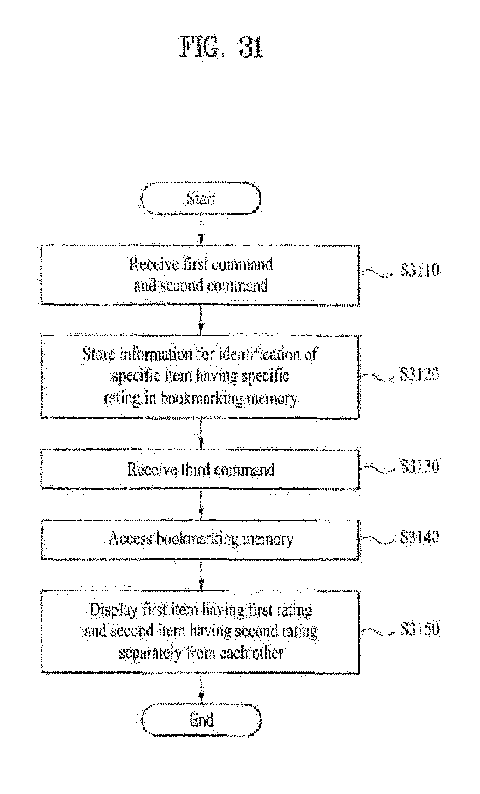

In addition, FIG. 31 is a flowchart of a process of outputting a bookmarked list by a network TV according to an embodiment of the present invention. Hereinafter, the process of outputting the bookmarked list by the network TV according to the embodiment of the present invention will be described with reference to FIG. 31. In addition, FIG. 31 can be further interpreted with reference to FIGs. 19 through 30 that have been described before.

According to an embodiment of the present invention, a network TV for bookmarking at least one or more item receives a first command for setting bookmarking of a currently executed item and a second command for selecting a rating of the bookmarked item (S3110).

The network TV stores information for identification of the bookmarked item having the selected rating in a bookmarking memory according to the received first command and second command (S3120) and receives a third command for listing at least one or more bookmarked items (S3130).

In addition, the network TV accesses the bookmarking memory (S3140) and displays a first item having a first rating and a second item having a second rating separately from each other according to a rating for each respective item stored in the bookmarking memory (S3150).

Furthermore, although not illustrated in FIG. 31, according to another embodiment of the present invention, a step S3110 further includes generating a list for determination of a total number of the items and displaying the generated list.

According to another embodiment of the present invention, a step S3150 includes setting a size of each icon corresponding to items having a rating of first priority to a first size according to a rating for each respective item stored in the bookmarking memory, setting a size of each icon corresponding to items having a rating of second priority to a second size according to a rating for each respective item stored in the bookmarking memory (where the size is smaller than the first size), and displaying icons of the set first size and icons of the set second size, which would be understood in more detail by one of ordinary skill in the art with reference to FIG. 24.

According to another embodiment of the present invention, a step S3150 includes displaying a title and description of each icon corresponding to items having a rating of first priority according to a rating for each respective item stored in the bookmarking memory, and displaying a title and description of each icon corresponding to items having a rating of second priority according to a rating for each respective item stored in the bookmarking memory, which would be understood in more detail by one of ordinary skill in the art with reference to FIG. 25.

According to another embodiment of the present invention, a step S3150 includes displaying a first tab formed by collecting items having rating with first priority and a second tab formed by collecting items having a rating with second priority, and displaying icons corresponding to items belonging to a selected specific tab when the specific tab is selected among the displayed tabs, which would be understood in more detail by one of ordinary skill in the art with reference to FIG. 29.

Furthermore, as described above, the item corresponds to, for example, at least one or more of application, a web site, a broadcast channel, or an external input source.

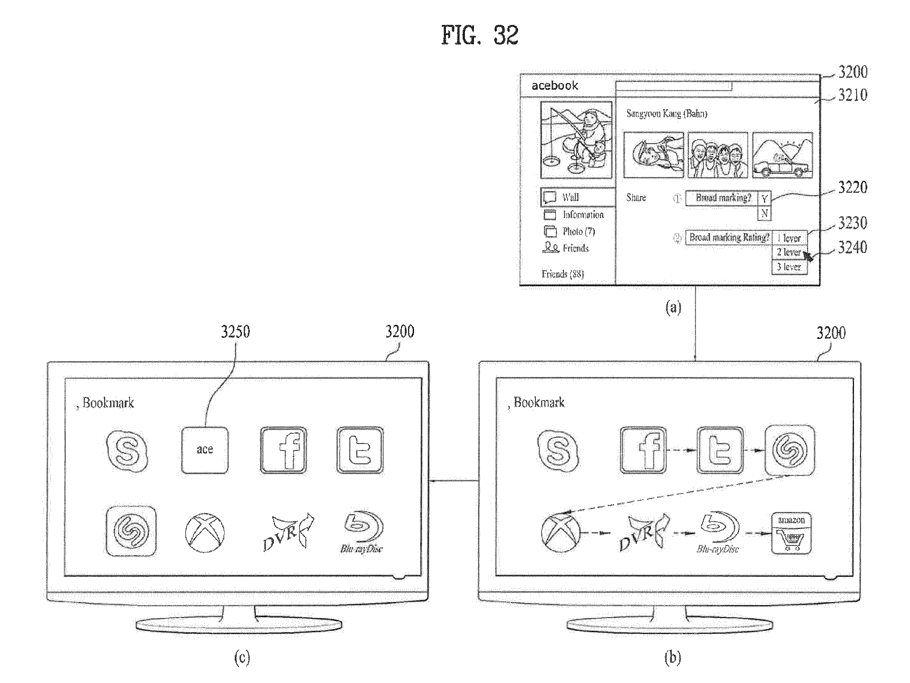

FIG. 32 is a diagram illustrating a process of adjusting a position of bookmarked item by a network TV 3200 according to another embodiment of the present invention. Hereafter, the process of adjusting the position of the bookmarked item by the network TV according to another embodiment of the present invention will be described in time sequence with reference to FIG. 32.

As illustrated in FIG. 32(a), it is assumed that the network TV 3200 according to the embodiment of the present invention executes an item 3210 of 'acebook' as an example of a specific item. In addition, the network TV 3200 that receives an input command via a hotkey, keyboard shortcut, or other settings outputs a message 3220 for asking whether a currently executed item is to be bookmarked.

Furthermore, when option for selection of bookmarking is clicked on in the message 3220, a message 3230 for adjusting a bookmarking position is output. In addition, a cursor or an arrow 3240 for selection of a specific position using a mouse, a keyboard, a remote controller, etc. is displayed together.

When a position of a specific item is selected to a second turn in FIG. 32(a), the network TV 3200 adjusts positions of pre-stored bookmarking icons, as illustrated in FIG. 32(b). In more detail, since the selected item is positioned in a second turn in FIG. 32(a), an icon that has been positioned in a second turn is changed to another position.

Thus, as illustrated in FIG. 32(c), the network TV 3200 displays a bookmarking list in which a specific item selected in FIG. 32(a), that is, acebook is positioned in a second turn 3250. When the network TV 3200 is designed in such a way, a user can maintain positions of desired items to optimized states.

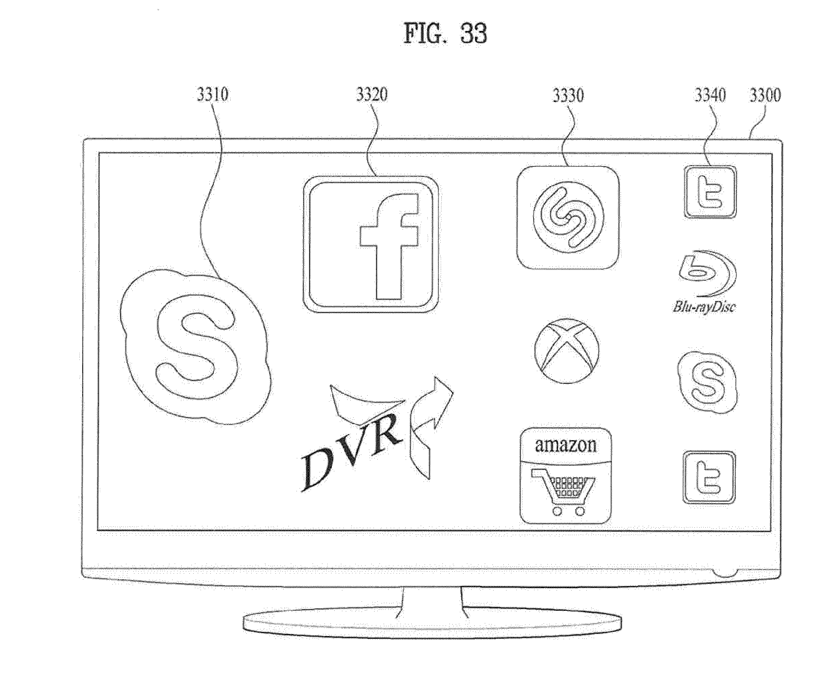

FIG. 33 is a diagram illustrating an example of a screen in which a network TV 3300 according to another embodiment of the present invention randomly adjusts icon sizes of bookmarked items. Hereinafter, a method of displaying icons of the bookmarked items with different sizes based on a position in a horizontal axis via the network TV 3300 according to the embodiment of the present invention will be described with reference to FIG. 33.

As illustrated in FIG. 33, the network TV 3300 according to the embodiment of the present invention displays icons with different sizes according to horizontal axis information of the icons on the screen. For example, the network TV 3300 displays an icon 3310 with a first size, positioned leftmost with respect to a user on the screen, displays an icon 3320 with a second size, positioned just right to the icon 3310, displays an icon 3330 with a third size, positioned just right to the icon 3320, and displays an icon 3340 with a fourth size, position just right to the icon 3330. Furthermore, the network TV 3300 is designed in such a way that the second size is smaller than the first size, the third size is smaller than the second size, and the fourth size is smaller than the third size.

As illustrated in FIG. 33, icon sizes are maintained regardless of change in position information in a vertical axis of the screen. For example, the network TV 3300 is designed in such a way that each icon positioned below the icon 3330 illustrated in FIG. 33 has the same size as the icon 3330. In addition, the network TV 3300 is designed in such a way that each icon positioned below 3340 illustrated in FIG. 33 has the same size as the icon 3340.

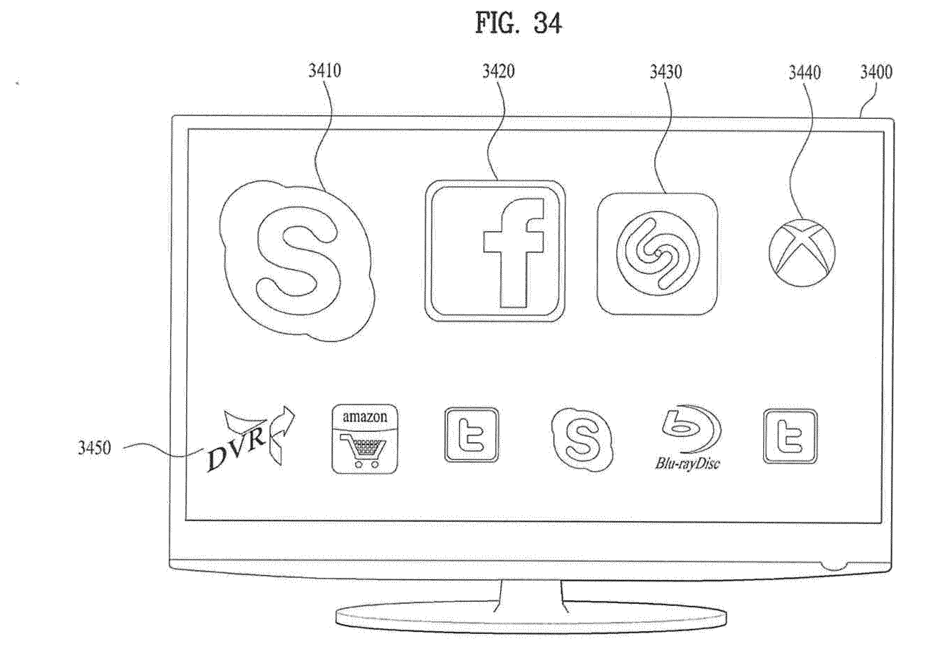

FIG. 34 is a diagram illustrating an example of a screen in which a network TV 3300 according to another embodiment of the present invention randomly adjusts icon sizes of bookmarked items. Hereinafter, a method of displaying icons of the bookmarked items with different sizes based on two references via a network TV 3400 according to the embodiment of the present invention will be described with reference to FIG. 34.

As illustrated in FIG. 34, the network TV 3400 according to the embodiment of the present invention displays icons, positioned in a first row, with different sizes in a predetermined direction. For example, the network TV 3400 displays a specific icon 3410 with a first size, positioned leftmost with respect to a user on the screen, displays another specific icon 3420 with a second size, displays another specific icon 3430 with a third size, and displays a last specific icon 3440 with a fourth size. In this case, the network TV 3400 is designed in such a way that the second size is smaller than the first size, the third size is smaller than the second size, and the fourth size is smaller than the third size.

On the other hand, icons positioned in a second row are displayed with the same size 3450 regardless of the predetermined direction. Thus, the user may adjust sizes of icons desired by the user using both the two methods.

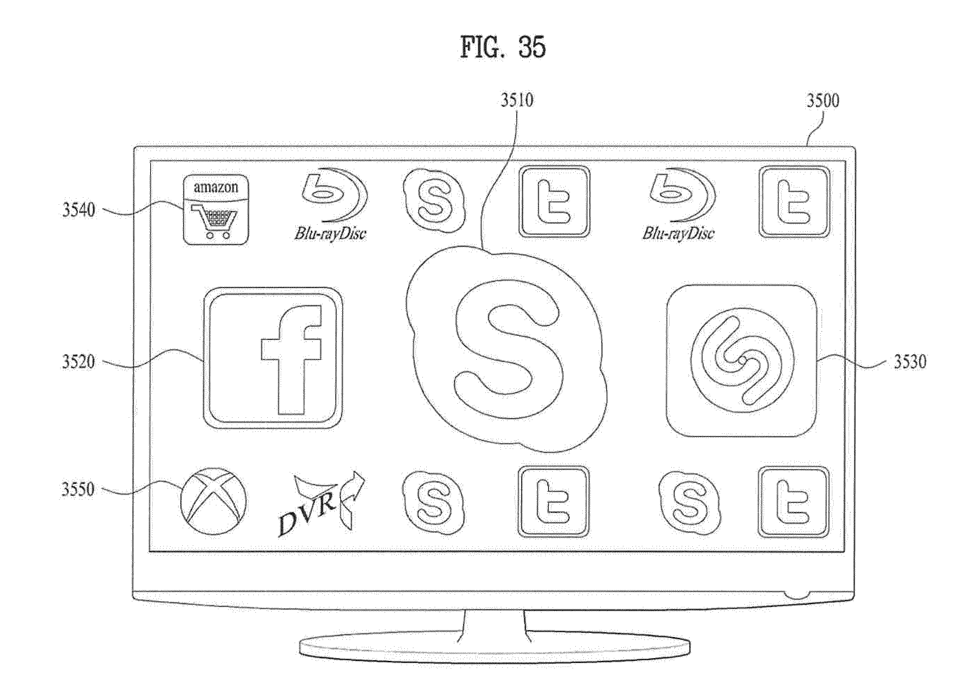

FIG. 35 is a diagram illustrating another example of a screen in which a network TV 3500 according to another embodiment of the present invention randomly adjusts icon sizes of bookmarked items. Hereinafter, a method of displaying icons of the bookmarked items with three arrangements via the network TV 3500 according to the embodiment of the present invention will be described with reference to FIG. 35.

As illustrated in FIG. 35, the network TV 3500 according to the embodiment of the present invention displays icons 3540 positioned in a first row that is the uppermost row with the same size. However, the icons 3540 are set to a smaller size than that of icons positioned in a second row, which will be described below.

As illustrated in FIG. 35, the network TV 3500 displays icons with different sizes, positioned in a second row that is an intermediate row of the screen, according to a position in a horizontal axis. That is, the network TV 3500 displays an icon 3510, positioned in a right central portion of the second row, with a largest size and displays icons 3520 and 3530 positioned in non-central regions of the second row with a size smaller than that of the icon 3510.

As illustrated in FIG. 35, the network TV 3500 displays icons 3550 with the same size, positioned in a third row that is a lowermost portion of the screen. The sizes of the icons 3550 positioned in the third row is set to be the same as or smaller than that of icons 3540 positioned in the first row.

Thus, the user can readily check specific icons having high priority and as many icons with relatively low priority if possible can be output in one image.

According to the aforementioned embodiments of the present invention, a bookmarking function is extended to an environment of a new device such as a network TV, thereby increasing item access speed of a consumer. In addition, a GUI that is relatively optimized to the user is designed to improve work effectiveness of bookmarking.

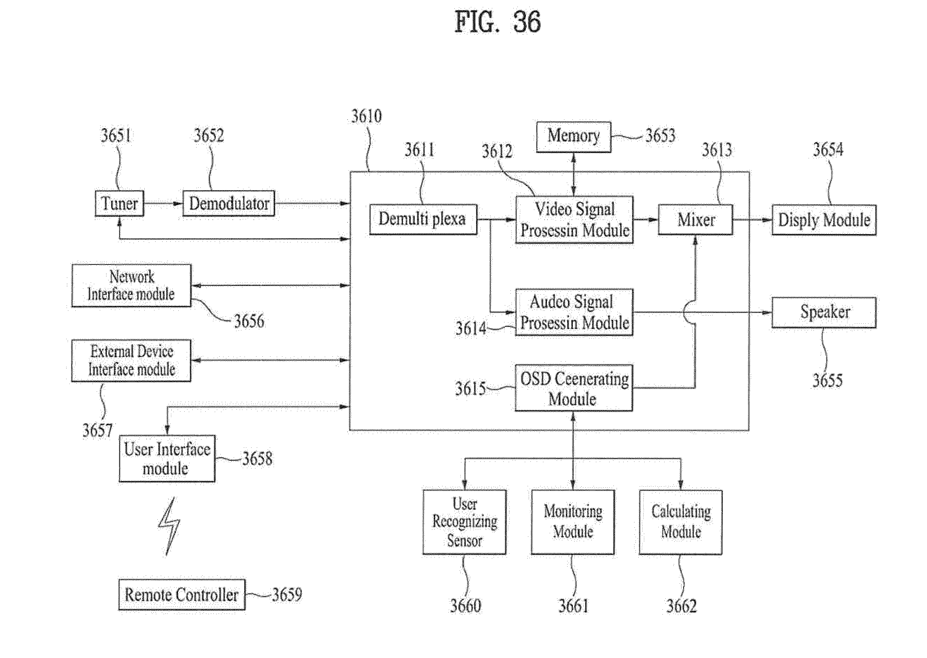

Hereinafter (in FIGs. 36 through 47), a solution for outputting a customized OSD to at least one or more users via the network TV according to the second embodiment of the present invention will be described with reference to FIGs. 1 through 35. For example, display of a plurality of items output on a bookmarking screen, a channel browsing screen, and an EPG screen in different types according to a usage history of each of the plural items will be described with regard to embodiments of the present invention.

FIG. 36 is a detailed block diagram of modules included in the network TV according to a second embodiment of the present invention. Hereinafter, a solution for the displaying an OSD in which modules included in the network TV according to the second embodiment are modified according to user information/item history information will be described with reference to FIG. 36 (together with FIGs. 6, 10, 13, and 14).

First, as shown in FIG. 36, the network TV according to the second embodiment includes, for example, a tuner 3651, a demodulator 3652, a network interface 3656, an external device interface 3657, a controller 3610, a memory 3653, a display 3654, a speaker 3655, a user recognition sensor 3660, a monitoring module 3661, a calculator 3662, a user interface 3658, and so on. Of course, FIG. 36 is a purely exemplary and needs to be defined by claims in principle.

A remote controller 3659 may be a general remote controller or may correspond to a spatial remote controller to motion remote controller shown in FIGs. 13 and 14, which has been described in detail with reference to FIGs. 13 and 14 and would be understood by one of ordinary skill in the art.

The tuner 3651 tunes a radio frequency (RF) broadcast signal corresponding to a channel selected by a user or pre-stored all channels among a plurality of RF broadcast signals received through an antenna and converts the tuned RF broadcast signal into an intermediate frequency (IF) signal or a baseband video or audio signal.

For example, when the tuned RF broadcast signal is a digital broadcast signal, the tuner 3651 converts the tuned RF broadcast signal into a digital IF (DIF) signal. On the other hand, when the tuned RF broadcast signal is an analog RF broadcast signal, the tuner 110, the tuner 110 converts the RF broadcast signal into an analog baseband video or audio signal CVBS/SIF. That is, the tuner 3651 can process all digital broadcast signals or analog broadcast signals. The analog baseband video or audio signal CVBS/SIF may be directly input to the controller the controller 3610.

The tuner 3651 can receive RF broadcast signals from an advanced television systems committee (ATSC) single-carrier system or from a digital video broadcasting (DVB) multi-carrier system.

The demodulator 3652 receives the digital IF signal DIF from the tuner 110 and demodulates the digital IF signal DIF. For example, if the digital IF signal DIF is an ATSC signal, the demodulator 3652 may perform 8-vestigal sideband (VSB) demodulation on the digital IF signal DIF. The demodulator 3652 may also perform channel decoding. For channel decoding, the demodulator 3652 may include a trellis decoder (not shown), a deinterleaver (not shown) and a reed-solomon decoder (not shown) so as to perform trellis decoding, de-interleaving and reed-solomon decoding.

The demodulator 3652 may perform demodulation and channel decoding on the digital IF signal DIF, thereby obtaining a transport stream (TS). The TS may be a signal in which a video signal, an audio signal and a data signal are multiplexed. For example, the TS may be an MPEG-2 TS in which an MPEG-2 video signal and a dolby AC-3 audio signal are multiplexed. An MPEG-2 TS may include a 4-byte header and a 184-byte payload.

The TS output from the demodulator 3652 may be input to the controller 3610 and thus subjected to demultiplexing and A/V signal processing. The processed video and audio signals are output to the display 3654 and the speaker 3655, respectively. In more detail, a demultiplexer 3611 demultiplexes the multiplexed video data and audio data, transmits the video data to a video signal processor 3612, and transmits the audio data to an audio signal processor 3614. The video signal processor 3612 converts a video data format that can be output from the display 3654. The audio signal processor 3614 converts an audio data format that can be output from the speaker 3655.

A mixer 3613 mixes the video data transmitted from the video signal processor 3612 and video data related to the OSD generated by an OSD generator 3615.

The external device interface 3657 is a module that is designed to transmit data between an external device and a TV. To this end, the external device interface 3657 may include an A/V I/O unit (not shown) or a wireless communication module (not shown).

The external device interface 3657 may be connected to an external device such as a digital versatile disc (DVD) player, a Blu-ray player, a game console, a camera, a camcorder, or a computer (e.g., a laptop computer), wirelessly or by wire. Then, the external device interface 3657 externally receives video, audio, or data signals from the external device and transmits the received input signals to the controller 3610 of the network TV. In addition, the external device interface 3657 may output video, audio, or data signals processed by the controller 3610 to the external device.

The A/V I/O unit may include a universal serial bus (USB) port, a composite video banking sync (CVBS) port, a component port, a super-video (S-video) (analog) port, a digital visual interface (DVI) port, a high-definition multimedia interface (HDMI) port, a red-green-blue (RGB) port, and a D-sub port, in order to input the video and audio signals of the external device to the network TV.

The wireless communication module may perform short-range wireless communication with other electronic devices. The wireless communication module may be connected to other electronic devices over the network using Bluetooth, radio-frequency identification (RFID), infrared data association (IrDA), ultra wideband (UWB), ZigBee, and digital living network alliance (DLNA) communication standards.

The external device interface 3657 may receive applications or an application list from an adjacent external device and provide the applications or the application list to the controller 3610 or the memory 3653.

The network interface 3656 serves as an interface between the network TV and a wired/wireless network such as the Internet. The network interface 3656 may include an Ethernet port for connection to a wired network. For connection to wireless networks, the network interface 3656 may use wireless local area network (WLAN) (i.e., Wi-Fi), wireless broadband (WiBro), world interoperability for microwave access (WiMax), and high speed downlink packet access (HSDPA).

The network interface 3656 may access a specific web page over a connected network or another network linked to the connected network. That is, the network interface 3656 may access a specific web page over a network and transmit or receive data to or from a server. Additionally, the network interface 3656 may receive content or data from a CP or an NP. Specifically, the network interface 3656 may receive content such as movies, advertisements, games, VoD, and broadcast signals, and information related to the content from a CP or an NP over the network. Also, the network interface 3656 may selectively receive a desired application among open applications over a network.

The memory 3653 may store various programs necessary for the controller 3610 to process and control signals, and may also store processed video, audio and data signals. In addition, the memory 3653 may temporarily store a video, audio or data signal received from the external device interface 3657 or the network interface 3656. The memory 3653 may store information about broadcast channels by the channel storage function. Lastly, the memory 3653 may store applications or a list of applications received from the external device interface 3657 or the network interface 3656.

The user interface 3658 transmits a signal received from the user to the controller 3610. For example, the user interface 3658 may receive control signals such as a power-on/off signal, a channel selection signal, and a screen setting signal from a remote controller 3659 may transmit a control signal received from the controller 3610 to the remote controller 3659, according to various communication schemes, for example, RF communication and IR communication.

In particular, functions of the user recognition sensor 3660, the monitoring module 3661, the calculator 3662, the OSD generator 3615, the memory 3653, and so on illustrated in FIG. 36 will be described with regard to the second embodiment of the present invention.

The OSD generator 3615 generates a first OSD for listing at least one or more items. The items may correspond to a random content and may be, for example, application that is received from the network interface 3656 or the external device interface 3657 and stored in the memory 3653.

The display 3654 displays the generated first OSD on a screen of the network TV. In this case, a size of an image corresponding to the at least one item is assumed to be R.

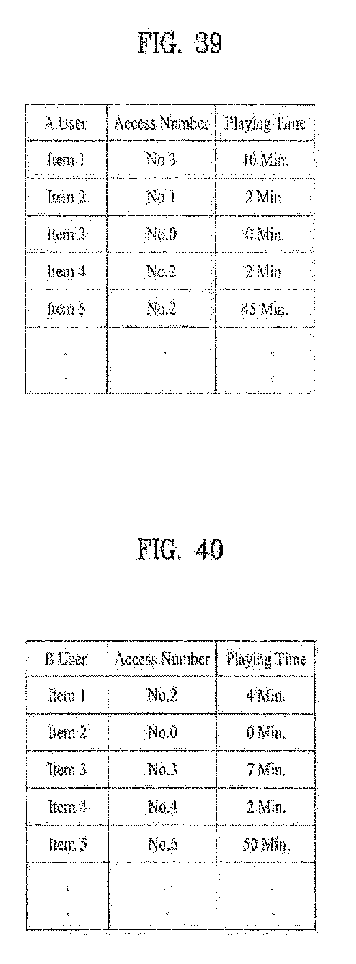

The monitoring module 3661 is designed to monitor a usage history of the at least one item. The memory 3653 stores the monitoring result. According to necessity of one of ordinary skill in the art, the memory 3653 may be designed to permanently store data or designed using a flash memory that temporally stores data. A database of the memory 3653 that stores the monitoring result will be described in more detail with reference to FIGs. 39 and 40.

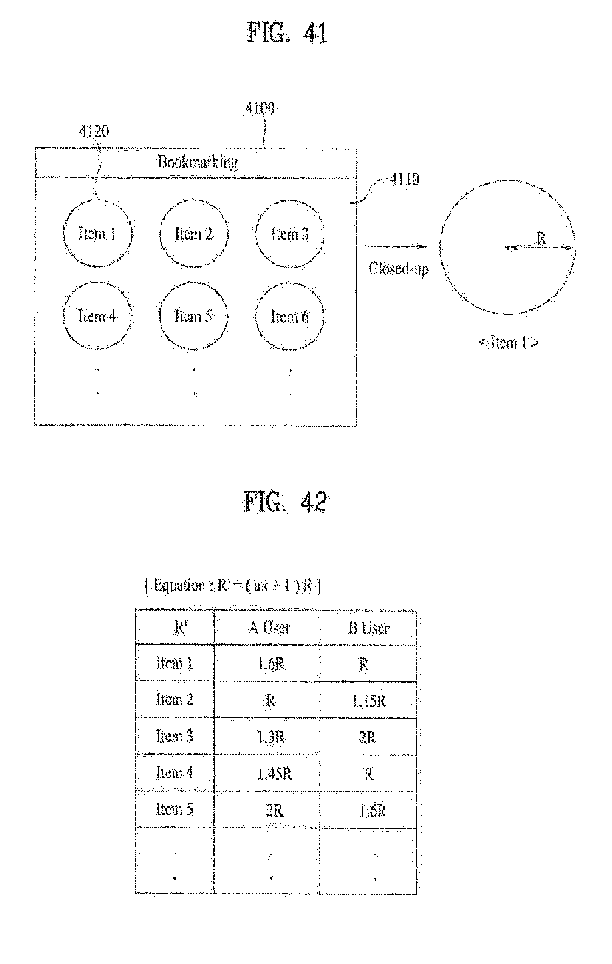

The calculator 3662 converts a size of an image corresponding to the at least one or more items to R' from R according to the monitoring result stored in the memory 3653. A process of converting the size of the image corresponding to the item to R' from R by the calculator 3662 will be described in more detail with reference to FIGs. 41 through 43.

When the OSD generator 3615 receives a command for outputting a list of pre-stored items using the remote controller 3659 or the user interface 3658, the OSD generator 3615 generates a second OSD for listing at least one or more items.

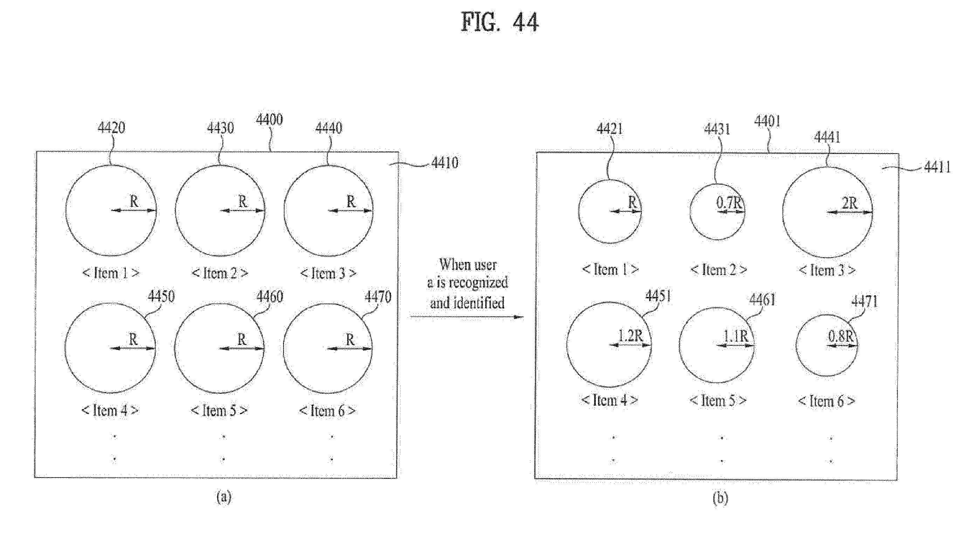

The display 3654 is designed to display the generated second OSD on the screen and a size of an image corresponding to the at least one or more items is R'. A process of displaying the aforementioned first OSD and second OSD via the display 3654 will be described in more detail with reference to FIGs. 44 through 47.

When the aforementioned network TV according to the second embodiment of the present invention is used, for example, application preferred by a user and non-preferred application can be readily identified, and in particular, user preference can be reflected in real time over time.

In addition, the monitoring module 3661 is designed to monitor, for example, at least one or more of first data regarding the number of times of access to each item, second data regarding total period of time for execution of each item, and third data regarding a period of time from a point of time for downloading each item.

Furthermore, for example, the calculator 3662 is designed to increase R' in proportion to the first data and the second data and to increase R' in inverse proportion to the third data.

The aforementioned embodiment corresponds to a case in which an item size on an OSD is changed according to a usage history of an item. A method of providing different OSDs for respective users of a network TV using the user recognition sensor 3660 will be described below.

The user recognition sensor 3660 is embodied according to the second embodiment of the present invention. For example, the user recognition sensor 3660 may be designed using an iris scan sensor, a finger scan sensor, a multiple camera solution, an ID/PW input method, and so on.

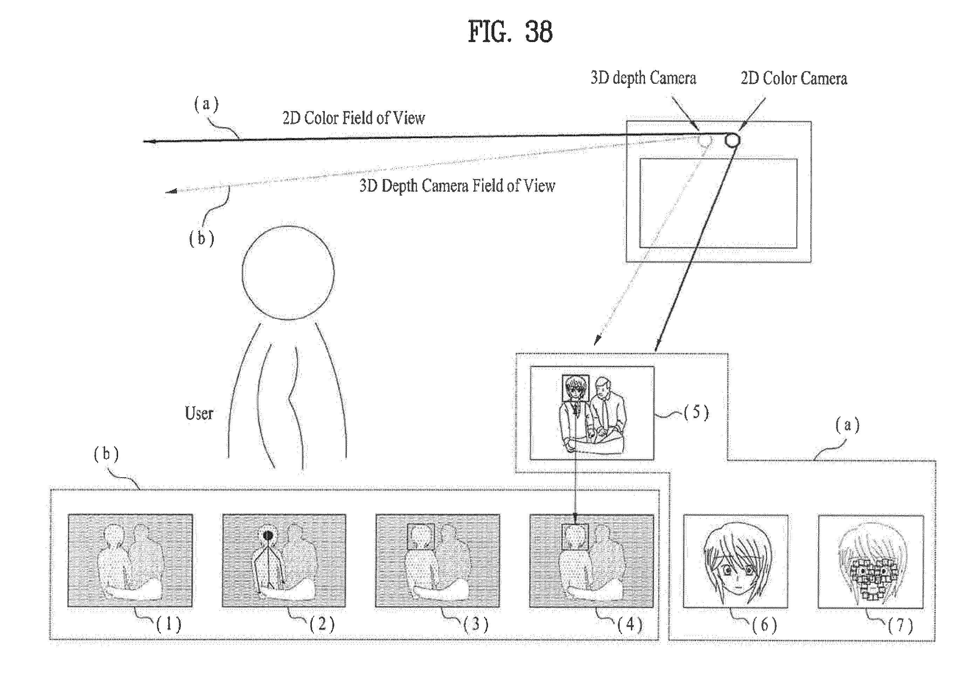

The aforementioned multiple camera solution is a method using a 2D camera and a 3D camera and is advantageous in that a user does not have to do any particular action. For example, the network TV is designed to recognize a user using the network TV using the 2D camera and to identify the recognized user using the 3D camera. In addition, a monitoring result of a first identified user is stored in a first address of the memory 3653 and a monitoring result of a second identified user is stored in a second address of the memory 3653. Thus, the network TV is advantageous in that structures of item lists are different for respective users. The multiple camera solution will be described in more detail with reference to FIG. 38.

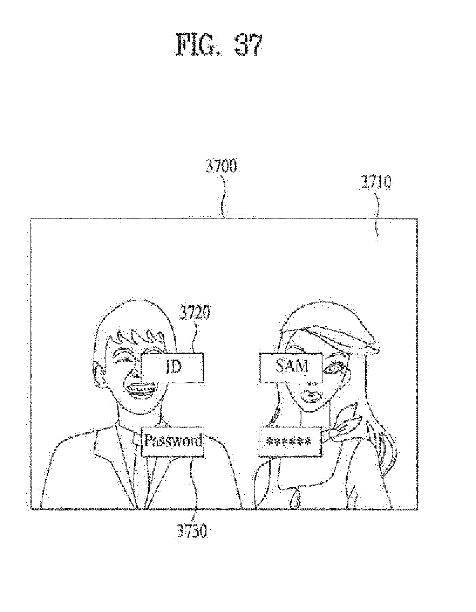

In addition, the ID/PW input method will be described in more detail with reference to FIG. 37.

FIG. 37 is a diagram illustrating an example, of a solution for identification of a plurality of users via the network TV 3700 according to the second embodiment of the present invention. Hereinafter, a method of identifying the plural users using an ID/PW input method via the network TV 3700 according to the second embodiment of the present invention will be described with reference to FIG. 37.

When power of the network TV 3700 according to the second embodiment of the present invention is switched to an on-state from a standby state, an initial image 3710 is displayed. The initial image 3710 corresponds to, for example, broadcast data received from a tuner, application received from a network interface, video data received from an external device interface, or the like.

In this case, the network TV 3700 is designed to output a guide message for identification of users. The guide message may include both an ID item 3720 and a passport 3730, as illustrated in FIG. 37.

Thus, when pre-set information is input to the ID item 3720 and the passport 3730, a current user of the network TV 3700 may be readily identified and only a usage history of items of the current user may be separately managed. However, when the network TV 3700 is designed in such a way, the user should input an ID and a passport. Thus, a solution that does not need any particular user action will be described with reference to FIG. 38.

FIG. 38 is a diagram illustrating another example of a solution for identification of a plurality of users via the network TV according to the second embodiment of the present invention. Hereinafter, a method of identifying the plural users using a multiple camera solution via the network TV according to the second embodiment of the present invention will be described with reference to FIG. 38.

In general, first image sensors related to depth data processing has an aspect that is not appropriate for long-distance facial recognition due to problems in terms of limited resolution (e.g., a maximum of VGA resolution) and a recognition distance (e.g., 3.5 m). In addition, second image sensors related to color data processing has low precognition speed and an aspect that is not robust to a light condition. Thus, in order to remedy these defects of each image sensor, a multimedia device according to an embodiment of the present invention is designed in conjunction with an image sensor module in the hybrid form obtained by a first image sensor and a second image sensor.

The aforementioned first image sensor may be, for example, an infrared (IR) camera or a depth camera. In more detail, the IR camera or the depth camera uses a time of flight (TOF) method and a structured light method. According to the TOF method, distance information is calculated using a time difference between infrared irradiation and return. According to the structured light method, a distance is calculated by irradiating infrared rays and analyzing modified patterns. However, the first image sensor has advantages in terms of depth data recognition and processing speed and can readily sense an object, human, and so on in a dark environment. However, the first image sensor has disadvantages of reducing resolution at a long distance.

Furthermore, the aforementioned second image sensor may be, for example, a color camera or an RGB camera. In more detail, for example, the color camera or the RGB camera uses a stereo camera method and a mono camera method. According to the stereo camera method, a hand, a face, and so on is detected and tracked based on image parallax comparison information between images captured by two cameras. According to the mono camera method, a hand, a face, and so on is detected and tracked based on shape and color information acquired via photography using one camera. However, the second image sensor has advantages in terms of improved resolution compared with the first image sensor and is vulnerable to surrounding lighting and performs recognition with difficulty. In particular, it is difficult to accurately recognize a depth.

To overcome such problems, as illustrated in FIG. 38, the network TV according to the second embodiment of the present invention is designed to include the first image sensor and the second image sensor. However, it may be possible that the image sensors are designed in the embedded form in the network TV or as a separate hardware module. First, as illustrated in FIG. 38(b), the first image sensor captures an image containing users positioned around the network TV. Detailed captured images are sequentially illustrated in (1), (2), (3), ad (4) of FIG. 38.

When photography and data analysis of the first image sensor are completed, the second image sensor captures an image of a user face, as illustrated in FIG. 38(a). Detailed captured images are sequentially illustrated in (5), (6), and (7) of FIG. 38.

Among a plurality of heterogeneous image sensors according to an embodiment of the present invention, the first image sensor captures a first image of an object positioned around the network TV and extracts depth data from the captured first image. The network TV may be designed in such a way that regions of objects are displayed with different contrasts according to a distance, as illustrated in (1) of FIG. 38.

Furthermore, the first image sensor may recognize and cognize at least one user face using the extracted depth data. That is, user body information (e.g., a face, a hand, a foot, a joint, etc.) is extracted as illustrated in (2) of FIG. 38, and position coordinate and distance information of a specific user face are acquired as illustrated in (3) of FIG. 38. In more detail, the network TV is designed to calculate x, y, and z that correspond to position information of the user face, where x refers to a position of the face in a horizontal axis in the captured first image, y refers to a position of the face in a vertical axis in the captured first image, and z refers to a distance between the user face and the first image sensor.

In addition, among a plurality of heterogeneous image sensors according to an embodiment of the present invention, the second image sensor captures a second image of the cognized user face, which is illustrated in (5) of FIG. 38.

When the first and second image sensors illustrated in FIG. 38 are designed adjacent to each other, errors due to a physical position difference may be negligible. However, according to another embodiment of the present invention, the first image sensor and the second image sensor are designed in such a way that coordinate information or distance information acquired by the first image sensor is corrected using the aforementioned physical position difference and the second image sensor photographs a user based on the coordinate information or distance information. When the first image sensor and the second image sensor are designed in a horizontal state in parallel to a ground, information regarding the aforementioned physical position difference may be set based on a horizontal frame. As illustrated in (7) of FIG. 38, features information is extracted from the captured second image. The feature information is, for example, data corresponding to a specific part for identification of a plurality of users using the network TV. Furthermore, the second image sensor may zoom in a region of the user face based on a coordinate value (x, y, and z) acquired via the photography of the first image sensor, which refers to a process of conversion to (6) of FIG. 38 from (5) of FIG. 38.

When photography and analysis of the first image sensor and the second image sensor are completed, the network TV according to the second embodiment of the present invention accesses a memory that stores data corresponding to the extracted feature information and extracts information for identification of a specific user, stored in the memory.

As described above, the network TV according to the second embodiment of the present invention is designed in such a way that the first image sensor detects user position information or face coordinate information and the second image sensor recognizes a face using data acquired by the first image sensor.

Furthermore, the network TV is designed in such a way that the second image sensor is not unconditionally used and operates only in a specific condition. For example, when information regarding a distance from a user, acquired via an operation of the first image sensor, is equal to or less than a first reference value or a recognition rate with respect to the user face acquired via the operation of the first image sensor is more than or equal to a second reference value, only the first image sensor detects and identifies a user face positioned around the network TV. On the other hand, when the information regarding the distance from the user, acquired via an operation of the first image sensor, exceeds the first reference value or the recognition rate with respect to the user face acquired via the operation of the first image sensor is less than the second reference value, the user face is recognized using the second image sensor in addition to the first image sensor.

Thus, when a plurality of heterogeneous image sensors of different types are used, a user positioned at a long distance from the network TV can be more accurately recognized and item usage histories for respective users can be monitored.

FIG. 39 is a diagram illustrating a database of a network TV for monitoring an item usage history of a first user, according to the second embodiment of the present invention. Hereinafter, the database of the network TV for monitoring the item usage history (e.g.,. access number of times and playback time) of the first user will be described with regard to the second embodiment of the present invention with reference to FIG. 39.

In FIGs. 37 or 38, it is assumed that a user A is identified as described above. Of course, although a database of a specific user is constructed in FIGs. 39 and 40, another embodiment of the present invention in which usage histories of respective items are monitored and stored instead of separate identification of a user belongs to the scope of the present invention.

A monitoring module of the network TV counts the number of times of execution whenever a specific item is executed (or is accessed). In addition, the monitoring module stores playback time of the executed item in a memory. Thus, the database illustrated in FIG. 39 may be constructed.

Although not illustrated in FIG. 39, the monitoring module is designed in such a way that a timer operates from an initial point of time when the specific item is stored in the memory of the network TV. Through this design, the user may apply a weight to a recently downloaded item compared with old downloaded item.

In addition, as illustrated in FIG. 39, according to the usage history of items used by the user A identified by a user recognition sensor of the network TV, the access number of times may be proportional to playback time or not.

FIG. 40 is a diagram illustrating a database of a network TV for monitoring an item usage history of a second user, according to the second embodiment of the present invention. Hereinafter, the database of the network TV for monitoring the item usage history (e.g.,. access number of times and playback time) of the second user will be described with regard to the second embodiment of the present invention with reference to FIG. 40.

Repeated description of FIG. 39 is not given herein. FIG. 39 illustrates the database of the item usage history of the user A. On the other hand, FIG. 40 illustrates the database of the item usage history of the user B.

Furthermore, data illustrated in FIG. 39 and data illustrated in FIG. 40 may be stored in the same memory and positioned in different addresses. In addition, a case in which separate memories are allocated to respective users belongs to the scope of the present invention.

FIG. 41 is a diagram illustrating a screen when a network TV 4100 according to the second embodiment of the present invention performs a bookmarking function. Hereinafter, an item size when the network TV according to the second embodiment of the present invention performs the bookmarking function will be described with reference to FIG. 41.

As illustrated in FIG. 41, for example, when user request is present, a network TV 4100 displays a bookmarking image 4110. In this case, the network TV 4100 may be designed in such a way that a bookmarked specific item 4120 has a radius R. Conventionally, a network TV is designed in such a way that most items have approximately the same size and are maintained to the same size regardless of an item usage history of a user.

Thus, in this case, a very old bookmarked item and a latest bookmarked item may be indicated in the same way and an item that is frequency used by a user and an item that is not frequently used by the user may be indicated without any particular difference.

Although items to which a bookmarking function is applied in FIG. 41, it is obvious that a case in which a list of items stored in the memory is displayed regardless of bookmarking, a case in which a channel browsing image is output, and a case in which an EPG image is configured may be applied to the scope of the present invention.

FIG. 42 is a diagram illustrating a first calculation method of automatically adjusting a size of a random item by a network TV according to the second embodiment of the present invention. Hereinafter, the first calculation method of automatically adjusting the size of the random item by the network TV according to the second embodiment of the present invention will be described with reference to FIG. 42.

It is assumed that users of the network TV are separately identified as illustrated in FIG. 37 or 38 and item usage histories for respective users are monitored as illustrated in FIG. 39 or 40. However, values illustrated in FIGs. 39 and 40 are for convenience of description and the scope of the present invention is not limited to the above values.

According to Equation R' = (ax + 1)R illustrated in FIG. 42, a calculator of the network TV reflects an item usage history to change each item size. R refers to an initial size of an item and R' refers to a size of the item to be changed. In addition, x corresponds to access number of times of the item or playback time of the item. In addition, 'a' refers to a positive constant. For example, 'a' may be set to 0.15.

As illustrated in FIG. 42, when the user A executes an item 1 four times ('a' is assumed to be 0.15 and 'x' corresponds to an access number of times of the item), the size of the item is changed to 1.6R(R') from R. When the user B executes an item 2 once ('a' is assumed to be 0.15 and 'x' corresponds to an access number of times of the item), the size of the item is changed to 1.15R(R') from R.

According to Equation illustrated in FIG. 42, R' may be a large value that cannot be predicted and risk of excessively affecting a display region of another item is present. Thus, in consideration of these aspects, a case in which R' is set not to exceed a predetermined maximum (e.g., 2R) belongs to the scope of the present invention.

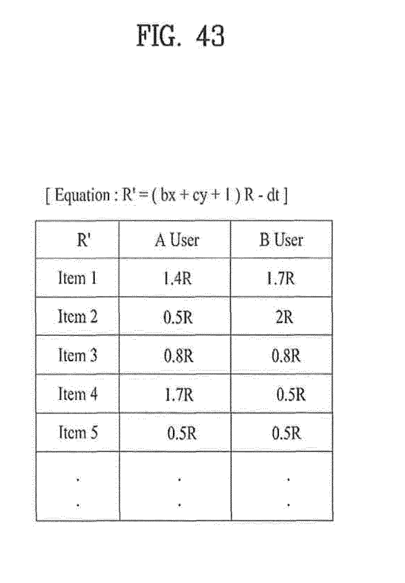

FIG. 43 is a diagram illustrating a second calculation method of automatically adjusting a size of a random item by a network TV according to the second embodiment of the present invention. Hereinafter, the second calculation method of automatically adjusting the size of the random item by the network TV according to the second embodiment of the present invention will be described with reference to FIG. 43.

It is assumed that users of the network TV are separately identified as illustrated in FIG. 37 or 38 and item usage histories for respective users are monitored as illustrated in FIG. 39 or 40. However, values illustrated in FIGs. 39 and 40 are for convenience of description and the scope of the present invention is not limited to the above values.

FIG. 42 illustrates a case in which any one of access number of times of the item or playback time of the item is selected as a parameter for determining an item size. On the other hand, FIG. 43, described below, illustrates a case in which information regarding a period of time from a point of time when an item is initially downloaded as well as access number of time and playback time is considered as a parameter for determination of an item size, which will be described in more detail.

According to Equation R' = (bx + cy +1)R - dt illustrated in FIG. 43, a calculator of the network TV reflects an item usage history to change each item size. R refers to an initial size of an item and R' refers to a size of the item to be changed. In addition, x corresponds to access number of times of the item, y refers to playback time of the item, and t corresponds to a period of time from a point of time when the item is initially downloaded. In addition, b, c, and d are positive constants.

Unlike in FIG. 42, a network TV corresponding to FIG. 43 is designed in such a way that as 't' increases, R' further decreases. Thus, a user can readily identify a very old downloaded item and a recently downloaded item.

However, when a long period of time elapses, if t is unpredictably increased, risk of giving a negative value to R' is present. Thus, in order to overcome this problem, a case in which R' is set not to be less than a minimum value (e.g., 0.5R) belongs to the scope of the present invention.

FIG. 44 is a diagram illustrating a process of outputting an image in which a size of an item is changed in consideration of an identified first user by a network TV 4400 according to the second embodiment of the present invention. Hereinafter, the process of outputting the image in which a size of an item is changed in consideration of an identified first user by the network TV 4400 according to the second embodiment of the present invention will be described with reference to FIG. 44.

It is assumed that an item size for each respective user is changed according to the calculation method illustrated in FIG. 42 or 43.

When a user of the network TV 4400 according to the second embodiment of the present invention requests output of a list of pre-stored items or items of bookmarked items, a first ODS 4410 illustrated in FIG. 44(a) is displayed. The first ODS 4410 includes, for example, an item 1 4420, an item 2 4430, an item 3 4440, an item 4 4450, an item 5 4460, and an item 6 4470, and have the same size (radius R). Of course, it is obvious that a case in which items having slight different sizes are output belongs to the scope of the present invention.

When a current user of the network TV 4400 is identified as the user A via the aforementioned user recognition sensor, a network TV 4401 outputs a second OSD 4411 as illustrated in FIG. 44(b).

The second OSD 4411 is the same as the second OSD 4410 in term of including, for example, an item 1 4421, an item 2 4431, an item 3 4441, an item 4 4451, an item 5 4461, and an item 6 4471. However, among the aforementioned items, sizes of the items 4441, 4451, and 4461 belonging to a first group increase, sizes of the items 4431 and 4471 belonging to a second group decrease, and sizes of the item 4421 belonging to a third group is maintained.

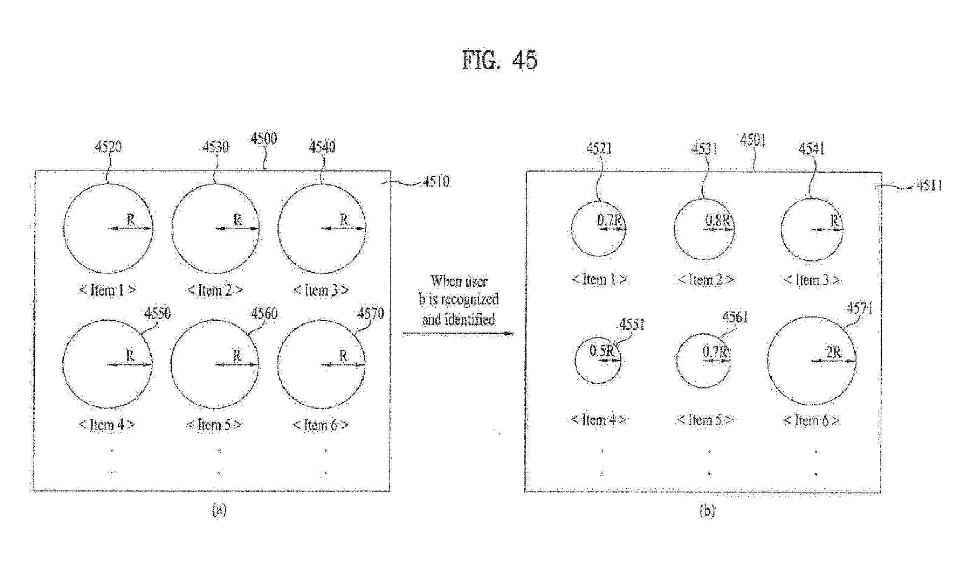

FIG. 45 is a diagram illustrating a process of outputting an image in which a size of an item is changed in consideration of an identified second user by a network TV 4500 according to the second embodiment of the present invention. Hereinafter, the process of outputting the image in which a size of an item is changed in consideration of an identified second user by the network TV 4500 according to the second embodiment of the present invention will be described with reference to FIG. 45.

It is assumed that an item size for each respective user is changed according to the calculation method illustrated in FIG. 42 or 43.

When a user of the network TV 4500 according to the second embodiment of the present invention requests output of a list of pre-stored items or items of bookmarked items, a first OSD 4510 illustrated in FIG. 45(a) is displayed. The first OSD 4510 includes, for example, an item 1 4520, an item 2 4530, an item 3 4540, an item 4 4550, an item 5 4560, and an item 6 4570, and have the same size (radius R). Of course, it is obvious that a case in which items having slight different sizes are output belongs to the scope of the present invention.

When a current user of the network TV 4500 is identified as the user B via the aforementioned user recognition sensor, a network TV 4501 outputs a second OSD 4511 as illustrated in FIG. 45(b).

The second OSD 4511 is the same as the first OSD 4510 in terms of including, for example, an item 1 4521, an item 2 4531, an item 3 4541, an item 4 4551, an item 5 4561, and an item 6 4571. However, among the aforementioned items, sizes of the item 4571 belonging to a first group increase, sizes of the items 4521, 4531, 4551, and 4561 belonging to a second group decrease, and sizes of the item 4541 belonging to a third group is maintained.

Thus, a user that checks the second OSD 4511 illustrated in FIG. 44(b) or 45(b) can readily check an item preferred by the user and selectivity of an item having high preference can be increased using the remote controller illustrated in FIG. 13 or 14. Preferred items occupy a wide region compared with non-preferred items.

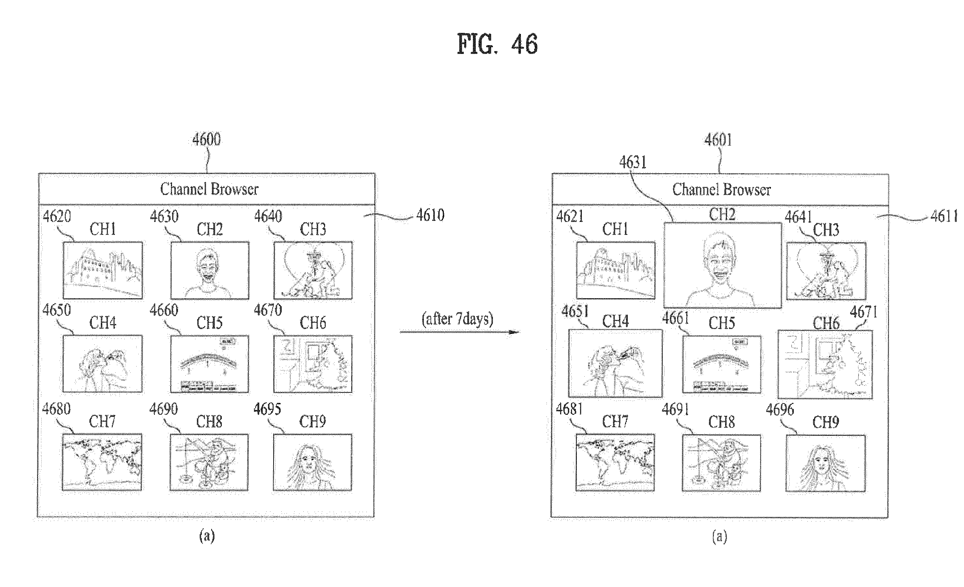

FIG. 46 is a diagram illustrating a process of outputting a changed channel browsing image by a network TV 4600 according to the second embodiment of the present invention. Hereinafter, the process of outputting the changed channel browsing image by the network TV 4600 according to the second embodiment of the present invention will be described with reference to FIG. 46.

Thus far, bookmarked items or pre-stored items have been described with reference to the above drawings. However, the present invention can be applied to an embodiment for embodying a channel browser image.

When a user inputs a command for execution of a channel browsing function, the network TV 4600 according to the second embodiment of the present invention displays a first OSD 4610 as illustrated in FIG. 46(a). The first OSD 4610 includes, for example, a capture image 4620 of a channel 1, a capture image 4630 of a channel 2, a capture image 4640 of a channel 3, a capture image 4650 of a channel 4, a capture image 4660 of a channel 5, a capture image 4670 of a channel 6, a capture image 4680 of a channel 7, a capture image 4690 of a channel 8, and a capture image 4695 of a channel 9.

In this case, the aforementioned monitoring module continuously checks tuning time of each channel and adjusts a size allocated to each channel on a channel browser image using Equation illustrated in FIG. 42.

For example, when seven days elapses from a point of time when an image of FIG. 46(a) is displayed, a network TV 4601 according to the second embodiment of the present invention displays a second OSD 4611 as illustrated in FIG. 46(b). The second OSD 4611 includes a capture image 4621 of a channel 1, a capture image 4631 of a channel 2, a capture image 4641 of a channel 3, a capture image 4651 of a channel 4, a capture image 4661 of a channel 5, a capture image 4671 of a channel 6, a capture image 4681 of a channel 7, a capture image 4691 of a channel 8, and a capture image 4696 of a channel 9.

Comparing FIGs. 46(a) and 46(b), it may be easily confirmed that a region of a channel that is frequently watched by a user relatively increases and a region of a channel that is less frequently watched by the user relatively decreases.

Thus, a user using the network TV according to the second embodiment of the present invention can rapidly access a channel preferred by the user in a complex channel browsing image.

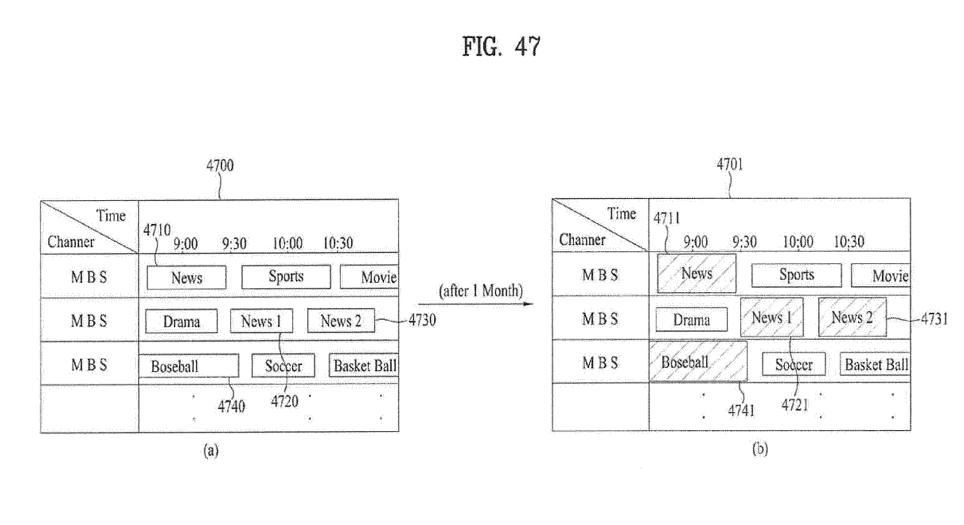

FIG. 47 is a diagram illustrating a process of outputting a changed electronic program guide (EPG) image by a network TV 4700 according to the second embodiment of the present invention. Hereinafter, the process of outputting the changed EPG image by the network TV 4700 according to the second embodiment of the present invention will be described with reference to FIG. 47.

Thus far, bookmarked items or pre-stored items have been described with reference to the above drawings. However, the present invention can be applied to an embodiment for embodying an EPG image.

When a user inputs a command for EPG execution, the network TV 4700 according to the second embodiment of the present invention displays a first EPG image as illustrated in FIG. 47(a). It is assumed that the user relatively frequently watches a news 4710 of an MBS broadcasting station, a news 1 4720 and a news 2 4730 of an SBC broadcasting station, and baseball broadcasting 4740 of a KBT broadcasting station for one month.

In this case, the aforementioned monitoring module continuously checks watching time of each event displayed in the EPG image and adjusts a size allocated to each event in the EPG image using Equation illustrated in FIG. 42.

For example, when about one month elapses, a network TV 4701 according to the second embodiment of the present invention displays a second EPG image as illustrated in FIG. 47(b). It may be confirmed that a region of a news 4711 of a MBS broadcasting station, a news 1 4721 and a news 4731 of a SBC broadcasting station, and baseball broadcasting 4741 of a KBT broadcasting station, which are particularly frequently watched by the user increases compared with other regions.

Accordingly, a user who uses the network TV according to the second embodiment of the present invention may experience an improved EPG image that is dynamically changed according to a watch history of the user instead of a fixed EPG image according to conventional art.

Furthermore, the embodiments of the present invention have been separately described with reference to each of the drawings. However, new embodiments may be obtained by combinations of embodiments illustrated in the drawings. According to necessity of one of ordinary skill in the art, a computer-readable recording medium in which a program for execution of the aforementioned methods is recorded belongs to the scope of the present invention.

A network TV and an operating method thereof according to the foregoing exemplary embodiments of the present invention are not limited to any particular components and methods. Embodiments of the present invention can be configured by entirely or partially selecting and combining the foregoing exemplary embodiments of the present invention.

The method for operating a network TV according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

It will be apparent to those skilled in the art that various modifications and variations can be made in the present invention without departing from the spirit or scope of the invention. Thus, it is intended that the present invention cover the modifications and variations of this provided they come within the scope of the the appended claims and their equivalents.

In addition, the present disclosure describes both a device invention and a method invention and can be understood with reference to both the device and method inventions together if necessary.

### [Mode for Invention]

Embodiments of the present invention can be repeatedly implemented by one of ordinary skill in the art with reference to the aforementioned "Best Mode".

### [Industrial Applicability]

The present invention is applicable to industrial fields related to technologies, for example, TV, DTV, IPTV, etc.

## Claims

1. A method of controlling a network TV for bookmarking at least one or more items, the method comprising:
receiving a first command for setting bookmarking of a currently executed item and a second command for selecting a rating of the bookmarked item;
storing information for identifying the bookmarked item having the selected rating in a bookmarking memory according to the first command and the second command;
receiving a third command for listing at least one or more bookmarked item;
accessing the bookmarking memory; and
displaying a first item having a first rating and a second item having a second rating separately from each other according to a rating for each respective item stored in the bookmarking memory.

2. The method according to claim 1, wherein the receiving of the first command and the second command comprises:
generating a list for determining a total number of ratings of the items; and
displaying the generated list.

3. The method according to claim 1, wherein the displaying comprises:
setting a size of each icon corresponding to items having a rating of first priority to a first size according to a rating for each respective item stored in the bookmarking memory;
setting a size of each icon corresponding to items having a rating of second priority to a second size according to a rating for each respective item stored in the bookmarking memory, wherein the second size is smaller than the first size; and
displaying icons of the first size and icons of the second size.

4. The method according to claim 1, wherein the displaying comprises:
displaying a title and description of each icon corresponding to items having a rating of first priority according to a rating for each respective item stored in the bookmarking memory; and
displaying a title and description of each icon corresponding to items having a rating of second priority according to a rating for each respective item stored in the bookmarking memory.

5. The method according to claim 1, wherein the displaying comprises:
displaying a first tab formed by collecting items having a rating with first priority and a second tab formed by collecting items having a rating with second priority; and
displaying icons corresponding to items belonging to a selected specific tab when the specific tab is selected among the displayed tabs.

6. The method according to claim 1, wherein the item corresponds to at least one or more of application, web site, a broadcast channel, or an external input source.

7. A computer readable recording medium having recorded thereon a program for executing the method according to any one of claims 1 to 6.

8. A network TV for bookmarking at least one or more items, the network TV comprising:
an interface for receiving a first command for setting bookmarking of a currently executed item and a second command for selecting a rating of the bookmarked item;
a bookmarking memory for storing information for identifying the bookmarked item having the selected rating in a bookmarking memory according to the first command and the second command;
a memory controller for accessing the bookmarking memory upon receiving a third command for listing at least one or more bookmarked item through the interface; and
a display for displaying a first item having a first rating and a second item having a second rating separately from each other according to a rating for each respective item stored in the bookmarking memory.

9. The network TV according to claim 8, further comprising a controller for generating a list for determining a total number of ratings of the items and displaying the generated list through the display.

10. The network TV according to claim 9, wherein the controller sets a size of each icon corresponding to items having a rating of first priority to a first size according to a rating for each respective item stored in the bookmarking memory, and sets a size of each icon corresponding to items having a rating of second priority to a second size according to a rating for each respective item stored in the bookmarking memory.

11. The network TV according to claim 10, wherein the display displays icons of the first size and icons of the second size.

12. The network TV according to claim 8, wherein the display displays a title and description of each icon corresponding to items having a rating of first priority according to a rating for each respective item stored in the bookmarking memory, and displays a title and description of each icon corresponding to items having a rating of second priority according to a rating for each respective item stored in the bookmarking memory.

13. The network TV according to claim 8, wherein the display displays a first tab formed by collecting items having a rating with first priority and a second tab formed by collecting items having a rating with second priority, and displays icons corresponding to items belonging to a selected specific tab when the specific tab is selected among the displayed tabs.

14. The network TV according to claim 8, wherein the item corresponds to at least one or more of application, web site, a broadcast channel, or an external input source.

15. A method of controlling a network TV for processing at least one or more items, the method comprising:
generating a first on screen display (OSD) for listing at least one or more items;
displaying the generated first OSD on a screen of the network TV, wherein a size of an image corresponding to the at least one or more items is R;
monitoring a usage history of the at least one or more items;
storing a monitoring result in a database;
converting a size of the image corresponding to the at least one or more items to R' from R according to the monitoring result stored in the database;
generating a second OSD for listing at least one or more items; and
displaying the generated second OSD on the screen, wherein a size of the image corresponding to the at least one or more items is R'.

16. The method according to claim 15, wherein the monitoring of the usage history of the at least one or more items comprises monitoring at least one or more of first data regarding a number of times of access to each item, second data regarding total period of time for execution of each item, and third data regarding a period of time from a point of time for downloading each item.

17. The method according to claim 16, wherein the converting of the size of the image comprises increasing R' in proportion to the first data and the second data and increasing R' in inverse proportion to the third data.

18. The method according to claim 16, wherein the converting of the size of the image comprises calculating R' according to an equation R' = (bx + cy + 1)R - dt, and
wherein x corresponds to the first data, y corresponds to the second data, t corresponds to the third data, and b, c, d, R, and R' are positive numbers.

19. The method according to claim 15, further comprising:
recognizing a user using the network TV using a 2D camera; and
identifying the recognized user using a 3D camera.

20. The method according to claim 19, wherein the storing of the monitoring result comprises:
storing a monitoring result of the identified first user in a first address of the database; and
storing a monitoring result of the identified second user in a second address of the database.
